# EUROPÄISCHE PATENTSCHRIFT

(11) **EP 3 156 464 B1**
(45) Veröffentlichungstag und Bekanntmachung des Hinweises auf die Patenterteilung: **02.12.2020**
(21) Anmeldenummer: 16193630.7
(22) Anmeldetag: 13.10.2016
(51) Int. Cl.: C09J 7/10, C09J 7/22, C09J 7/38, C09J 153/02, C08L 53/02, C08L 91/00

(54) **SELBSTKLEBEARTIKEL MIT RAUER ANFASSERFOLIE**
SELF-ADHESIVE PRODUCT HAVING A ROUGH TOUCH STRIP
ARTICLE AUTOCOLLANT COMPRENANT UNE FEUILLE RUGUEUSE DE PRÉHENSION

(30) Priorität: 15.10.2015 DE 102015220075
(43) Veröffentlichungstag der Anmeldung: 19.04.2017
(73) Patentinhaber: tesa SE, 22848 Norderstedt (DE)
(72) Erfinder: JUNGHANS, Andreas, 22457 Hamburg (DE); ALTENWEGNER, Tanja, 20357 Hamburg (DE)

(56) Entgegenhaltungen:
- DE-A1-102013 206 624
- US-A1- 2009 004 422

## Beschreibung

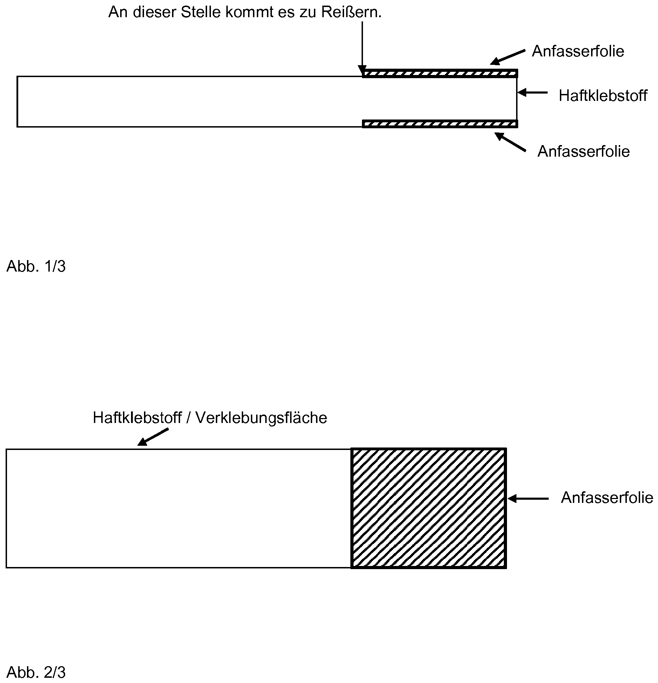

Die vorliegende Erfindung betrifft einen Klebstreifen, ein- oder beidseitig haftklebrig, enthaltend mindestens eine Haftklebemasseschicht, wobei der Klebstreifen einen Anfasserbereich aufweist, an dem sich der Klebstreifen durch dehnendes, verstreckendes Ziehen in Richtung der Verklebungsebene wiederablösen lässt, wobei der Klebstreifen im Anfasserbereich auf mindestens einer Seite mit einer Anfasserschicht versehen ist, sowie die Verwendung solcher Klebstreifen. Ein solcher Klebstreifen ist in Abb. 1 im Querschnitt und in Abb. 2 in Draufsicht gezeigt.

Durch dehnendes, verstreckendes Ziehen in Richtung der Verstreckungsebene rückstandsfrei von einem Verklebungsuntergrund ablösbare Selbstklebeprodukte sind bekannt. Solche als "stripfähig" bezeichneten Klebstreifen sind z. B. als tesa® Powerstrips® oder 3M Command™ kommerziell erhältlich und werden nachfolgend auch als stripfähige Haftklebestreifen oder einfach als (Klebe-)strips bezeichnet.

Eine Herausforderung bei den rückstandsfrei entfernbaren Haftklebprodukten ist das einfache Ablösen auch nach Jahren. Die einseitig silikonisierte PET-Folie (Silikonisierung zur Klebmasse), die derzeit als Anfasserschicht (hier Anfasserfolie) in manchen heutigen Produkten verwendet wird, löst sich leicht von der Klebmasse und ist besonders beim Entfernen des Strips auf sensiblen und spaltbaren Untergründen zu rutschig (Abgleiten der Finger von der Folie). Derartige Anfasserfolien, bei denen die PET-Folie auf der Seite zur Klebmasse silikonisiert ist, weisen den Vorteil auf, dass im Belastungsfall ein Abreißen des Anfassers vom restlichen Strip verhindert werden kann. Im Belastungsfall wirken Zug- und/oder Schubspannungen auf den Klebverbund. Nachteilig dagegen ist die leichte, unbeabsichtigte Ablösbarkeit derartiger Anfasserfolien von der Klebemasse in der Anwendung durch den Nutzer, also die ungenügende Verankerung der Anfasserfolie auf der Klebmasse.

Insbesondere bei Verklebungen auf sensiblen und spaltbaren Untergründen wie z.B. Putz, Tapeten, insbesondere Raufasertapeten, oder gestrichenen Flächen ist zudem eine Unterbrechung des Ablösevorgangs (z.B. beim Nachgreifen des Anfassers, weil die Anfasserfolie im Anfassbereich zum Anwender hin rutschig ist) von Nachteil. Der Haftklebstoff relaxiert während der Unterbrechung des Ablösevorgangs. Die Folge ist ein erneutes unkontrolliertes Haften auf dem empfindlichen Untergrund. In Anwendungstests zeigte sich eine hohe Schadenshäufigkeit - z.B. Tapetenabrisse, Delaminationen von Farbschichten - bei Verwendung von Anfassern, die eine Oberfläche mit geringer Griffigkeit aufweisen.

Ein fest auf dem Haftklebprodukt verankertes Anfassermaterial - z.B. eine Folie - wäre hier von Vorteil. Zudem ist eine Verbesserung der Griffigkeit des Anfassermaterials für eine verbesserte Handhabung im Ablöseprozess gewünscht.

Befindet sich der Anfasser, bestehend aus einem dehnbaren Haftklebstoff und einer hierauf fest verklebten Anfasserschicht, wie z.B. einer rigiden (im Vergleich zur Klebmasse deutlich geringere Dehnbarkeit) Folie, im Belastungsfall sogar unter Einwirkung einer vertikalen Last oberhalb des Klebverbunds, so ist die Klebmasse an der in der Abb. 1 eingezeichneten Stelle besonders hohen mechanischen Belastungen und damit einer sehr starken Verformung ausgesetzt, wenn zusätzlich Schubspannungen während des Wiederablösens durch Dehnung in entgegengesetzter Richtung zu den Schubspannungen, die aus der vertikalen Last resultieren, einwirken. Kettensegmente an der Stelle des Klebstoffs richten sich aus, es kann zu einer Dehnungskristallisation kommen und schließlich zum Abriss des Anfassers. Derartige Vorschädigungen werden insbesondere durch Umwelteinflüsse signifikant verstärkt. Zwar kann eine UV-undurchlässige Anfasserfolie die Klebmasse vor UV-Strahlung schützen, allerdings muss es noch mindestens einen weiteren negativen Umwelteinfluss auf die Klebmasse geben, weil selbst der Schutz vor UV-Strahlung nicht alle Haftklebmassen von den Alterungseffekten Versprödung/Verharzung freihält.

Wie dem negativen Einfluss von UV-Strahlung auf das Klebprodukt im Bereich des Anfassers mit einer UV-undurchlässigen Folie entgegengewirkt wird, ist in EP 578 979 beschrieben. Durch dehnendes Verstrecken ablösbare Haftklebemassen mit verbesserter Ozonbeständigkeit sind aus der DE 10 2013 206 624 A1 bekannt. Ferner beschreibt EP 702 069 den guten Klebverbund einer rauen Anfasserfolie mit Klebmasse und EP 1 217 054 die Griffigkeit der Anfasserfolie (Haftreibungskraft). Diese Schriften liefern jedoch noch keine zufriedenstellende Lösung für das vorstehend geschilderte Problem. So kann es bei diesen bekannten Lösungen beim Versuch des Wiederablösens zu einem Reißen des Klebeproduktes kommen, insbesondere im Grenzbereich zwischen dem Anfasser und der Klebemasse.

Aufgabe der Erfindung war es daher, ein relaxierendes, dehnungsfähiges Haftklebeprodukt in Kombination mit einem hierauf fest verklebten rigiden (relativ gering dehnbaren) Anfassermaterial zur Verfügung zu stellen, so dass das Haftklebprodukt, das mit oder ohne Träger (z.B. aus Schaumstoff) fest mit der Oberfläche eines Substrats verbunden werden kann, mit Hilfe des Anfassers mit verbesserter Griffigkeit ohne Schwierigkeiten nahezu parallel zu der Oberfläche des Substrats (< 35°) gedehnt und rückstandsfrei entfernt werden kann, erstmals dann auch von sensiblen und spaltbaren Substratoberflächen. Die Haftklebemasseschichten des Haftklebeprodukts sollen mit anderen Worten auf der einen Seite eine hohe Reißfestigkeit und auf der anderen Seite ein hohes Vermögen zum Abbau innerer Spannungen aufweisen.

Die Aufgabe wird mit einem Klebstreifen der eingangs genannten Art dadurch gelöst, dass zumindest eine Anfasserschicht eine Schichtdicke von höchstens 50 µm, insbesondere zwischen 10 und 40 µm, und auf mindestens einer Seite, insbesondere auf beiden Seiten, eine Rauheit von Sₐ 0,10 bis 2,00 µm, insbesondere von Sₐ 0,15 bis 0,8 µm, bevorzugt 0,3 bis 0,8 µm, besonders bevorzugt 0,5 bis 0,8 µm, aufweist und dass die Trennkraft der Anfasserschicht von der Haftklebemasseschicht mindestens 1 N/cm, insbesondere mindestens 3 N/cm, beträgt, wobei sich die raue Seite auf der Seite der Haftklebemasseschicht befindet, und dass mindestens eine der mindestens einen Haftklebemasseschichten zumindest eine Elastomerkomponente vom Typ eines Butadien-Vinylaromaten-Blockcopolymers aufweist, wobei die mindestens eine Elastomerkomponente zu mindestens 90 Gew.-%, bezogen auf den Gesamtblockcopolymergehalt, aus mindestens einem Polybutadien-Vinylaromaten-Blockcopolymer besteht, wobei das mindestens eine Polybutadien-Vinylaromaten-Blockcopolymer Polymerblöcke, überwiegend gebildet durch Polymerisation von Vinylaromaten (A-Blöcke), vorzugsweise Styrol, und solche, überwiegend gebildet durch Polymerisation von 1,3-Butadien (B-Blöcke), enthält.

Solche Haftklebeprodukte gewährleisten einen besonders festen Verbund zwischen Anfasserschicht und Klebmasse. Die Anfasserschicht verbleibt während des gesamten Ablösevorganges sicher auf der Haftklebemasseschicht. Gleichzeitig wird ein Abreißen des Anfasserbereiches nahezu sicher ausgeschlossen.

Die Rauheit der Anfasserschicht kann insbesondere durch Ätzen bewirkt werden. Aber auch andere Oberflächenbehandlungen wie Coronabehandlung können zum Einsatz kommen. Bei einseitig rauen Anfasserschichten ist erfindungsgemäß vorgesehen, dass die raue Seite der oder den Haftklebemasseschicht(en) zugewandt ist.

Die erfindungsgemäßen Haftklebeprodukte können als ein Ein- oder ein Mehrschichtaufbau mit einem Träger (z.B. Schaumstoff) dargestellt werden. Ist die Anfasserschicht insbesondere beidseitig rau, so ergibt sich zum einen ein besonders fester Verbund zwischen Anfasserschicht und Klebmasse. Dadurch wird ein unbeabsichtigtes Ablösen der Anfasserschicht(en) vom Haftklebstoff durch fehlerhafte Anwendung oder beim Wiederablösen des Klebstreifens durch Verdehnung vermieden. Zum anderen wird der Anfasser durch die Struktur griffiger. Neben der besseren Griffigkeit beim Ablösen und dem besseren Verbund zwischen Folie und Klebmasse reflektieren raue Folien (z.B. geätzte Folien) nur wenig Licht, was dekorative Anwendungen unterstützt, indem die freiliegenden Anfasserbereiche optisch weniger auffallen. Zudem sind sie besser bedruckbar und lassen signifikant weniger UV-Strahlung durch als glatte (z.B. Folien, die nicht geätzt sind).

Bei herkömmlichen Klebmassen führt neben UV-Strahlung auch eine Ozonbelastung - besonders im Belastungsfall unter Zug- und/oder Schubspannung - zu einer Versprödung/Verharzung der Klebmasse. Daher ist außer der Relaxation des Haftklebstoffs auch die Ozonstabilität eine wichtige Eigenschaft der Klebmasse des erfindungsgemäßen Klebstreifens.

Die Anfasserschicht ist vorzugsweise ausgewählt aus Aluminium, Kunststoff, insbesondere PET, PP, PVC oder PUR, und Papier. Gerade Kunststoff lässt sich hervorragend, z.B. durch Ätzen, aufrauen. Die Anfasserschicht kann in Form einer fertigen Folie auf die Haftklebemasseschicht aufgebracht werden, z.B. mittels Kaschieren. Es ist jedoch auch denkbar, dass die Anfasserschicht durch einen gesonderten Druck oder durch Bestäuben aufgebracht wird. Wird die Anfasserfolie zusätzlich bedruckt oder beschichtet, was innen oder auch außen möglich wäre, so stets in der Weise, dass den Anforderungen an Verankerungskraft auf der Klebeschichtoberfläche und Griffigkeit entsprochen wird.

Besonders bevorzugt ist die Anfasserschicht releaseschichtfrei mit dem Klebstreifen verbunden, wobei die Anfasserschicht vorzugsweise zumindest auf der dem Klebstreifen zugewandten Seite keine silikonisierte Oberfläche aufweist. Bei Klebstreifen nach dem Stand der Technik befindet sich zwischen Anfasserschicht und Haftklebemasseschicht ganz überwiegend noch eine Releaseschicht, üblicherweise in Form einer Silikonbeschichtung. Diese sorgt dafür, dass die Haftklebemasse auf dem starren (im Vergleich zum übrigen Teil des Selbstklebestrips gering dehnbaren) Anfassermaterial "fließen" kann und vermeidet so Risse in der Haftklebemasse, die ein Abreißen des Anfasserbereiches zur Folge haben könnten. Der erfindungsgemäße Klebstreifen kommt ohne eine solche Releaseschicht aus. Vielmehr ist die Haftklebemasse des erfindungsgemäßen Klebstreifens ausreichend kohäsiv und gegenüber äußeren Alterungseinflüssen ausreichend widerstandfähig, um ein solches Reißen zu vermeiden.

Dabei ist es insbesondere vorteilhaft, wenn der Diblockanteil der mindestens einen Elastomerkomponente der Haftklebemasse des erfindungsgemäßen Klebstreifens 5 bis 60 Gew.-%, besonders bevorzugt 10 bis 55 Gew.-%, weiter bevorzugt 32 bis 50 Gew.-%, bezogen auf den Gesamtblockcopolymergehalt, beträgt. Zu hohe Anteile an Diblock reduzieren die Kohäsion der Formulierung. Bei völliger Abwesenheit von Diblockcopolymeren ist reduziertes Anpassungsvermögen im Verklebungsprozess auf dem Zieluntergrund zu erwarten.

Besonders geeignet ist ein Klebstreifen, bei dem die mindestens eine Haftklebemasseschicht des Weiteren
(a) zumindest ein Klebharz, das ein Molgewicht M_{w} von bevorzugt höchstens 5.000 g/mol aufweist, das mit Polybutadienblöcken kompatibel ist und das mit den Vinylaromatenblöcken im Wesentlichen nicht kompatibel ist,
(b) optional zumindest ein Weichharz mit einem Anteil von 0 Gew.-% bis 15 Gew.-%, bezogen auf die Gesamtklebemasse,
(c) optional weitere Additive
enthält.

Vorzugsweise ist dabei das mindestens eine Klebharz ein Kohlenwasserstoffharz mit einem DACP-Wert von mindestens +5°C und höchstens +50°C, vorzugsweise höchstens +45°C. Ebenfalls ist es bevorzugt, dass das mindestens eine Klebharz ein Kohlenwasserstoffharz mit einem MMAP-Wert von mindestens +50°C und höchstens +85°C, vorzugsweise höchstens +80°C, ist. Dabei beträgt die Harzerweichungstemperatur des Kohlenwasserstoffharzes mindestens +90°C, vorzugsweise mindestens +110°C, und höchstens +140°C, vorzugsweise höchstens +120°C.

Weiterhin ist es besonders vorteilhaft, dass die mindestens eine Haftklebemasseschicht mindestens 2 Gew.-%, vorzugsweise mindestens 5 Gew.-%, und höchstens 15 Gew.-%, vorzugsweise höchstens 12 Gew.-% Weichharz mit einer Schmelzviskosität von mindestens 25 Pa·s, jeweils bezogen auf die Gesamtklebemasse, enthält. Die Klebemasse kann aber auch frei von solchen Weichharzen sein.

Auf niedrigviskose Weichmacher kann die Haftklebemasseschicht des erfindungsgemäßen Klebstreifens verzichten, so dass die mindestens eine Haftklebemasseschicht vorteilhaft höchstens 1 Gew.-%, vorzugsweise 0 Gew.-%, bezogen auf die Gesamtklebemasse, niederviskose Weichmacher mit einer Viskosität von unter 25 Pa·s enthält.

Ebenfalls bevorzugt weist die Haftklebemasseschicht eine Zugfestigkeit als Einzelschicht von mindestens 9 MPa, bevorzugt von mindestens 11 MPa, auf. Dabei wird die Zugfestigkeit nach ISO 1926 bestimmt. Sie kann aber auch geringer sein und zwischen etwa 5 MPa und 9 MPa liegen.

Besonders bevorzugt ist mindestens eine der mindestens einen Haftklebemasseschichten ausgewählt aus den Haftklebemassenschichten HK1, HK2 und HK3, wobei Haftklebemasseschicht HK1
a) zumindest eine Elastomerkomponente vom Typ eines Polybutadien-Polyvinylaromaten-Blockcopolymers mit einem Anteil in Bezug auf die Gesamtklebemasse von 42 Gew.-% bis 55 Gew.-% und einem Diblockanteil in Bezug auf den Gesamtblockcopolymergehalt von 32 Gew.-% bis 55 Gew.-%, vorzugsweise bis 50 Gew.-%,
b) zumindest ein Klebharz, das ein Kohlenwasserstoffharz mit einem DACP-Wert von mindestens +5°C und höchstens +50°C und einem MMAP-Wert von mindestens +50°C und höchstens +85°C ist,
c) optional zumindest ein Weichharz mit einem Anteil von 0 Gew.-% bis 15 Gew.-%, bezogen auf die Gesamtklebemasse,
d) optional weitere Additive
enthält, wobei Haftklebemasseschicht HK2
e) zumindest eine Elastomerkomponente vom Typ eines Polybutadien-Polyvinylaromaten-Blockcopolymers mit einem Anteil in Bezug auf die Gesamtklebemasse von 40 Gew.-% bis 60 Gew.-% und einem Diblockanteil in Bezug auf den Gesamtblockcopolymergehalt von 10 Gew.-% bis 30 Gew.-%,
f) zumindest ein Klebharz, das ein Kohlenwasserstoffharz mit einem DACP-Wert von mindestens +5°C und höchstens +50°C und einem MMAP-Wert von mindestens +50°C und höchstens +85°C ist,
g) zumindest ein Weichharz mit einem Anteil von 0 Gew.-% bis 15 Gew.-%, bezogen auf die Gesamtklebemasse,
h) optional weitere Additive
enthält und wobei Haftklebemasseschicht HK3
i) zumindest eine Elastomerkomponente vom Typ eines Butadien-Blockcopolymers mit einem Anteil in Bezug auf die Gesamtklebemasse von 38 Gew.-% bis 48 Gew.-% und einem Diblockanteil in Bezug auf den Gesamtblockcopolymergehalt von 10 Gew.-% bis 30 Gew.-%,
j) zumindest ein Klebharz, das ein Kohlenwasserstoffharz mit einem DACP-Wert von mindestens +5°C und höchstens +50°C und einem MMAP-Wert von mindestens +50°C und höchstens +85°C ist,
k) zumindest ein Weichharz mit einem Anteil von 2 Gew.-% bis 15 Gew.-%, bezogen auf die Gesamtklebemasse,
l) optional weitere Additive
enthält.

Derartige Haftklebemasseschichten weisen eine gute Ozon- und UV-Beständigkeit auf, wobei sie zugleich ein gutes und sicheres Haften der Anfasserschicht(en) auf der Haftklebemasseschicht gewährleisten.

### Haftklebemasse HK1

Haftklebemassen vom Typ HK1 eignen sich besonders gut zur Verklebung auf rauen Untergründen wie Putz oder Raufasertapete, insbesondere gestrichener Raufasertapete. Auch für eine Verklebung auf anderen rauen und/oder leicht spaltbaren Oberflächen wie Holz, Strukturtapeten; Paneelen oder Wandtafeln, sind Klebemassen vom Typ HK1 besonders geeignet.

### (a) Elastomer (Blockcopolymer)

Als Elastomerkomponente (Blockcopolymerkomponente) kommt, vorzugsweise zu mindestens 90 Gew.-% (bezogen auf den Gesamtblockcopolymergehalt), ein Polybutadien-Polyaromaten-Blockcopolymer oder ein Gemisch aus verschiedenen Polybutadien-Polyvinylaromaten-Blockcopolymeren zum Einsatz. Dieses Polybutadien-Polyvinylaromaten-Blockcopolymer beziehungsweise diese Polybutadien-Polyvinylaromaten-Blockcopolymere sind solche, die Polymerblöcke überwiegend gebildet von Vinylaromaten (A-Blöcke), bevorzugt Styrol, und solche überwiegend gebildet durch Polymerisation von 1,3-Butadien (B-Blöcke) enthalten. Polybutadien-Blockcopolymere (SBS) werden im Sinne dieser Erfindung auf Grund ihrer höheren Stabilität gegenüber äußeren Einflüssen wie z. B. Ozon im Vergleich zu Polyisopren-Blockcopolymeren (SIS) bevorzugt. SIS-haltige Formulierungen sind üblicherweise nicht 1:1 auf SBS-haltige und SIS-freie Formulierungen übertragbar, wenn ein vergleichbares mechanisches Eigenschaftsprofil erreicht werden soll. Will man auf SIS in der Formulierung verzichten und stattdessen mit SBS arbeiten, dann müssen die SBS-haltigen Formulierungen speziell angepasst werden, um das vorgegebene Eigenschaftsprofil zu erfüllen. Zumindest zum Teil lassen sich diese Unterschiede in der Weichheit von SIS und SBS (indiziert durch die Shore A Härte) erklären. Die Shore A Härte ist typischerweise für SIS geringer als für SBS Systeme.

Das Elastomergemisch enthält zumindest ein Polybutadien-Polyvinylaromaten-Blockcopolymer bestehend aus einem A-Block und einem B-Block, dem sogenannten Diblockcopolymer. Diblockcopolymere tragen zu Tack und Auffließvermögen der Klebemasse bei. Das Elastomergemisch enthält zudem ein Triblockcopolymer oder ein höheres Multiblockcopolymer mit zumindest zwei A-Blöcken und zumindest einem B-Block. Dieses kann als Triblockcopolymer eine lineare A-B-A-Struktur aufweisen. Einsetzbar sind ebenfalls Blockcopolymere von radialer Gestalt sowie sternförmige und lineare Multiblockcopolymere. Triblock- und Multiblockcopolymere tragen zu Kohäsion und Zugfestigkeit der Klebemasse bei. Es können mehrere verschiedene Diblockcopolymere eingesetzt werden. Es können mehrere Triblock- und/oder Multiblockcopolymere eingesetzt werden. Der Gesamtblockcopolymergehalt in der Klebemasse liegt bei mindestens 42 Gew.-% und bei höchstens 55 Gew.-%. Deutlich geringere Anteile an Elastomer führen zu nicht ausreichender Kohäsion, was sich in reduzierter Halteleistung und/oder reduzierter Reißfestigkeit beim unter dehnendem Verstrecken durchgeführten Ablöseprozess äußert. Deutlich höhere Anteile an Elastomer führen zu einem Abfall an Verklebungsfestigkeit insbesondere auf unpolaren Untergründen wie zum Beispiel unpolarer Anstreichfarbe und reduzierter Anpassungsfähigkeit an raue Untergründe. Der Anteil an Diblockcopolymeren bezogen auf den Gesamtblockcopolymergehalt in der Klebemasseformulierung liegt bei mindestens 32 Gew.-% und bei höchstens 55 Gew.-%, bevorzugt bei höchstens 50 Gew.-%. Deutlich höhere Diblockanteile führen zu nicht ausreichender Kohäsion, was sich in reduzierter Halteleistung und/oder reduzierter Reißfestigkeit beim unter dehnendem Verstrecken durchgeführten Ablöseprozess äußert. Deutlich geringere Diblockanteile führen zu einem Abfall an Verklebungsfestigkeit insbesondere auf unpolaren Untergründen wie zum Beispiel unpolarer Anstreichfarbe. Entsprechend beträgt der Anteil an Tri- oder höherem Multiblockcopolymer von 45 Gew.-% bis 68 Gew.-%, vorzugsweise 50 Gew.-% bis 68 Gew.-% in Bezug auf den Gesamtblockcopolymergehalt. Unter den Tri- oder höheren Multiblockcopolymeren sind die Triblockcopolymere besonders bevorzugt.

Die gewichtsmittlere Molmasse (gemessen nach Test l) der Blockcopolymere liegt zwischen 50 000 g/mol und 500 000 g/mol, bevorzugt zwischen 75 000 g/mol und 200 000 g/mol. Der Anteil an Vinylaromatenblock in den Blockcopolymeren kann von Blockcopolymersorte zu Blockcopolymersorte in der Formulierung unterschiedlich sein, liegt aber typischerweise bei mindestens 20 Gew.-%, bevorzugt bei mindestens 25 Gew.-% und höchstens bei 40 Gew.-%, bevorzugt höchstens bei 35 Gew.-%. Ein zu geringer Polyvinylaromatenanteil führt zu unzureichender physikalischer Vernetzung, die in den Polybutadien-Polyvinylaromaten-Blockcopolymeren durch Mikrophasenseparation geschaffen wird. Die physikalische Vernetzung ist für die Halteleistung und die Reißfestigkeit wichtig. Bei einem zu hohen Polyvinylaromatenanteil dagegen verliert die Klebemasse an Klebrigkeit.

Vorzugsweise besitzen die Blockcopolymere der Haftklebmassen als A-Blöcke Polystyrolendblöcke. Anstelle der bevorzugten Polystyrolblöcke können als Vinylaromaten auch Polymerblöcke auf Basis anderer aromatenhaltiger Homo- und Copolymere (bevorzugt C8- bis C12-Aromaten) mit Glasübergangstemperaturen von größer 75 °C genutzt werden wie zum Beispiel α-methylstyrolhaltige Aromatenblöcke. Weiterhin können auch gleiche oder unterschiedliche A-Blöcke enthalten sein. Glasübergangstemperaturen werden nach Test II bestimmt.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 40 °C, insbesondere mindestens 60 °C und für B-Blöcke höchstens -50 °C insbesondere höchstens -80 °C) wider. Diese Angaben beziehen sich auf die reinen, unabgemischten Blockcopolymere.

Die aus den A- und B-Blöcken resultierenden Polybutadien-Blockcopolymere können gleiche oder unterschiedliche B-Blöcke enthalten und zwar im Hinblick auf Mikrostruktur (relatives Verhältnis der für Polybutadien möglichen Monomerverknüpfungsarten 1,4-cis, 1,4-trans, 1,2-vinyl: bevorzugt ist ein 1,4-Anteil (cis + trans) von > 75 %, sehr bevorzugt von > 85 % bezogen auf die Polybutadienblöcke und ein 1,4-cis-Anteil von > 40 % bezogen auf die Polybutadienblöcke) und/oder Kettenlänge. Ein hoher Anteil an 1,4-Verknüpfung und insbesondere 1,4-cis-Verknüpfung der Monomereinheiten in den PolybutadienBlöcken führt zu vorteilhafter Zug/Dehnungs-Charakteristik, so dass eine ausreichende Dehnbarkeit resultiert, die insbesondere für das unter Verstreckung rückstandsfreie Wiederablösen wichtig ist. Die 1,2-vinyl-Einheiten können hydriert sein. Die 1,4-Einheiten sind vorteilhafterweise im Wesentlichen nicht hydriert.

### (b) Klebharz

Klebharze sind spezielle Verbindungen mit im Vergleich zu den Elastomeren niedriger Molmasse typischerweise mit einem Molekulargewicht (Test I) Mw < 5 000 g/mol. Typischerweise beträgt das Molekulargewicht Mw von 500 bis 5 000 g/mol, bevorzugt von 500 bis 2 000 g/mol. Das zumindest eine Klebharz weist einen DACP-Wert (nach Test III) von mindestens etwa +5 °C und höchstens etwa +50°C, bevorzugt von höchstens etwa +45 °C, sowie einem MMAP-Wert (nach Test IV) von mindestens etwa +50 °C und höchstens etwa +85 °C, bevorzugt von höchstens etwa +80 °C auf. Bei entsprechend ausgewählten Klebharzen ist Kompatibilität mit den Polybutadienblöcken und Inkompatibilität mit Polyvinylaromatenblöcken in im Sinne dieser Erfindung günstiger Ausprägung zu erwarten. Das Klebharz weist eine Harzerweichungstemperatur (nach Test V) von mindestens etwa 90 °C, bevorzugt von mindestens etwa 110 °C, und höchstens +140 °C, bevorzugt von höchstens +120 °C auf. Bei dem verwendeten zumindest einen Klebharz handelt es sich vorteilhaft um ein Kohlenwasserstoffharz.

Zu hohe Polarität (zu geringe DACP-Werte) führt zu beginnender Verträglichkeit mit den Vinylaromatenblöcken, was zu Reduktion der Kohäsion und damit der Zugfestigkeit führen kann. Zu geringe Polarität (zu hohe DACP-Werte) führt zu Inkompatibilität des Klebharzes mit dem Weichblock und damit zu einem Verlust von Haftklebrigkeit.

Zu hohe Aromatizität (zu geringe MMAP-Werte) führt zu beginnender Verträglichkeit mit den Vinylaromatenblöcken, was zu Reduktion der Kohäsion und damit der Zugfestigkeit führen kann. Zu geringe Aromatizität (zu hohe MMAP-Werte) führt zu Inkompatibilität des Klebharzes mit dem Weichblock und damit zu einem Verlust von Haftklebrigkeit.

Die Harze werden bevorzugt aus den Harzklassen der (teil)hydrierten aromatisch modifizierten C5-Harze, der Polyterpen-Harze (hergestellt aus α-Pinen, β-Pinen, δ-Limonen oder Gemischen dieser Ausgangsstoffe), der teilhydrierten C9-Harze, der (teil)hydrierten aromatisch modifizierten α-Pinen-Harze, der (teil)hydrierten aromatisch modifizierten β-Pinen-Harze, der (teil)hydrierten aromatisch modifizierten δ-Limonen-Harze und der (teil)hydrierten aromatisch modifizierten Dipenten-Harze gewählt. Bei der aromatischen Modifizierung wird Styrol bevorzugt. Sehr bevorzugt werden Polyterpene-Harze.

### (c) Optionale Weichharze

Das optional einsetzbare Weichharz dient zur finalen Feineinstellung der Kohäsions-/ Adhäsions-Balance. Es handelt sich dabei sehr bevorzugt um ein Weichharz oder Weichharzgemisch mit einer Schmelzviskosität bei 25 °C und 1 Hz von zumindest 25 Pa*s, bevorzugt von zumindest 50 Pa*s und einer Erweichungstemperatur von < 25 °C. Die Schmelzviskosität wird nach Test VI bestimmt. Bei dem Weichharz kann es sich um ein Kolophonium basierendes oder sehr bevorzugt um ein Kohlenwasserstoff basierendes Weichharz handeln. Das Weichharz oder das Weichharzgemisch kommt in Bezug auf die Gesamtklebmasseformulierung mit einem Anteil von 0 Gew.-% bis 15 Gew.-%, bevorzugt von mindestens 5 Gew.-% und höchstens 12 Gew.-% bezogen auf die Gesamtklebemassezusammensetzung zum Einsatz. Ein zu hoher Anteil an Weichharz führt zu einer Verringerung der Kohäsion, was sich in der Halteleistung und in der Zugfestigkeit zeigt.

Übliche niederviskose Weichmacher wie Mineralöle sind im Sinne dieser Erfindung unvorteilhaft. Ihr Anteil in der Gesamtrezeptur liegt vorzugsweise bei höchstens 1 Gew.-%, sehr bevorzugt wird auf solche Weichmacher vollständig verzichtet. Nachteilig an Weichmachern geringer Viskosität ist die Gefahr, dass saugfähige Verklebungsuntergründe wie Raufasertapete durchfettet werden können. Nach Wiederablösen des Klebestreifens bleibt ein unerwünschter optischer Eindruck an der Verklebungsstelle zurück.

### Haftklebemasse HK2

Haftklebemassen vom Typ HK2 bieten besonders hohe Halteleistungen.

### (a) Elastomer (Blockcopolymer)

Vorzugsweise kommt als Elastomerkomponente (Blockcopolymerkomponente), besonders bevorzugt zu mindestens 90 Gew.-% (bezogen auf den Gesamtblockcopolymergehalt), ein Polybutadien-Polyvinylaromaten-Blockcopolymer oder ein Gemisch aus verschiedenen Polybutadien-Polyvinylaromaten-Blockcopolymeren zum Einsatz. Dieses Polybutadien-Polyvinylaromaten-Blockcopolymer beziehungsweise diese Polybutadien-Polyvinylaromaten-Blockcopolymere sind solche, die Polymerblöcke überwiegend gebildet von Vinylaromaten (A-Blöcke), bevorzugt Styrol, und solche überwiegend gebildet durch Polymerisation von 1,3-Butadien (B-Blöcke) enthalten. Polybutadien-Blockcopolymere (SBS) werden im Sinne dieser Erfindung auf Grund ihrer höheren Stabilität gegenüber äußeren Einflüssen wie z. B. Ozon im Vergleich zu Polyisopren-Blockcopolymeren (SIS) bevorzugt.

Das Elastomergemisch enthält vorzugsweise zumindest ein Polybutadien-Polyvinylaromaten-Blockcopolymer bestehend aus einem A-Block und einem B-Block, dem sogenannten Diblockcopolymer. Diblockcopolymere tragen zu Tack und Auffließvermögen der Klebemasse bei. Das Elastomergemisch enthält bevorzugt zudem ein Triblockcopolymer oder ein höheres Multiblockcopolymer mit zumindest zwei A-Blöcken und zumindest einem B-Block. Dieses kann als Triblockcopolymer eine lineare A-B-A-Struktur aufweisen. Einsetzbar sind ebenfalls Blockcopolymere von radialer Gestalt sowie sternförmige und lineare Multiblockcopolymere. Triblock- und Multiblockcopolymere tragen zu Kohäsion und Zugfestigkeit der Klebemasse bei. Es können mehrere verschiedene Diblockcopolymere eingesetzt werden. Es können mehrere Triblock- und/oder Multiblockcopolymere eingesetzt werden. Der Gesamtblockcopolymergehalt in der Klebemasse liegt insbesondere bei mindestens 40 Gew.-% und bei höchstens 60 Gew.-%. Deutlich geringere Anteile an Elastomer führen zu nicht ausreichender Kohäsion, was sich in reduzierter Halteleistung und/oder reduzierter Reißfestigkeit beim unter dehnendem Verstrecken durchgeführten Ablöseprozess äußert. Der Anteil an Diblockcopolymeren bezogen auf den Gesamtblockcopolymergehalt in der Klebemasseformulierung liegt vorteilhaft zwischen mindestens 10 Gew.-% und höchstens 30 Gew.-%. Deutlich höhere Diblockanteile führen zu nicht ausreichender Kohäsion, was sich in einer Reduktion der sehr hohen Halteleistung und/oder reduzierter Reißfestigkeit beim unter dehnendem Verstrecken durchgeführten Ablöseprozess äußert. Deutlich geringere Diblockanteile führen zu einem Abfall an Verklebungsfestigkeit. Entsprechend beträgt der Anteil an Tri- oder höherem Multiblockcopolymer in dieser vorteilhaften Ausführung von 40 Gew.-% bis 60 Gew.-%in Bezug auf den Gesamtblockcopolymergehalt. Unter den Tri- oder höheren Multiblockcopolymeren sind die Triblockcopolymere besonders bevorzugt.

Die gewichtsmittlere Molmasse (gemessen nach Test I) der Blockcopolymere liegt zwischen 50 000 g/mol und 500 000 g/mol, bevorzugt zwischen 75 000 g/mol und 200 000 g/mol. Der Anteil an Vinylaromatenblock in den Blockcopolymeren kann von Blockcopolymersorte zu Blockcopolymersorte in der Formulierung unterschiedlich sein, liegt aber typischerweise bei mindestens 20 Gew.-%, bevorzugt bei mindestens 25 Gew.-% und höchstens bei 40 Gew.-%, bevorzugt höchstens bei 35 Gew.-%. Ein zu geringer Polyvinylaromatenanteil führt zu unzureichender physikalischer Vernetzung, die in den Polybutadien-Blockcopolymeren durch Mikrophasenseparation geschaffen wird. Die physikalische Vernetzung ist für die Halteleistung und die Reißfestigkeit wichtig. Bei einem zu hohen Polyvinylaromatenanteil dagegen verliert die Klebemasse an Klebrigkeit.

Vorzugsweise besitzen die Blockcopolymere der Haftklebmassen als A-Blöcke Polystyrolendblöcke. Anstelle der bevorzugten Polystyrolblöcke können als Vinylaromaten auch Polymerblöcke auf Basis anderer aromatenhaltiger Homo- und Copolymere (bevorzugt C8- bis C12-Aromaten) mit Glasübergangstemperaturen von größer 75 °C genutzt werden wie zum Beispiel α-methylstyrolhaltige Aromatenblöcke. Weiterhin können auch gleiche oder unterschiedliche A-Blöcke enthalten sein. Glasübergangstemperaturen werden nach Test II bestimmt.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 40 °C, insbesondere mindestens 60 °C und für B-Blöcke höchstens -50 °C insbesondere höchstens -80 °C) wider. Diese Angaben beziehen sich auf die reinen, unabgemischten Blockcopolymere.

Die aus den A- und B-Blöcken resultierenden Polybutadien-Blockcopolymere können gleiche oder unterschiedliche B-Blöcke enthalten und zwar im Hinblick auf Mikrostruktur (relatives Verhältnis der für Polybutadien möglichen Monomerverknüpfungsarten 1,4-cis, 1,4-trans, 1,2-vinyl: bevorzugt ist ein 1,4-Anteil (cis + trans) von > 75 %, sehr bevorzugt von > 85 % bezogen auf die Polybutadienblöcke und ein 1,4-cis-Anteil von > 40 % bezogen auf die Polybutadienblöcke) und/oder Kettenlänge. Ein hoher Anteil an 1,4-Verknüpfung und insbesondere 1,4-cis-Verknüpfung der Monomereinheiten in den PolybutadienBlöcken führt zu vorteilhafter Zug/Dehnungs-Charakteristik, so dass eine ausreichende Dehnbarkeit resultiert, die insbesondere für das unter Verstreckung rückstandsfreie Wiederablösen wichtig ist. Die 1,2-vinyl-Einheiten können hydriert sein. Die 1,4-Einheiten sind vorteilhafterweise im Wesentlichen nicht hydriert.

### (b) Klebharz

Vorzugsweise enthält die Klebemasse HK2 des Weiteren ein Klebharz. Auch hier handelt es sich bei den Klebharzen um spezielle Verbindungen mit im Vergleich zu den Elastomeren niedriger Molmasse mit einem typischen Molekulargewicht (Test I) Mw < 5 000 g/mol. Typischerweise beträgt das Molekulargewicht Mw von 500 bis 5 000 g/mol, bevorzugt von 500 bis 2 000 g/mol. Das zumindest eine Klebharz weist einen DACP-Wert (nach Test III) von mindestens etwa +5 °C und höchstens etwa +50°C, bevorzugt von höchstens etwa +45 °C, sowie einem MMAP-Wert (nach Test IV) von mindestens etwa +50 °C und höchstens etwa +85 °C, bevorzugt von höchstens etwa +80 °C auf. Bei entsprechend ausgewählten Klebharzen ist Kompatibilität mit den Polybutadienblöcken und Inkompatibilität mit Polyvinylaromatenblöcken in im Sinne dieser Erfindung günstiger Ausprägung zu erwarten. Das Klebharz weist eine Harzerweichungstemperatur (nach Test V) von mindestens etwa 90 °C, bevorzugt von mindestens etwa 110 °C, und höchstens +140 °C, bevorzugt von höchstens +120 °C auf. Bei dem verwendeten zumindest einen Klebharz handelt es sich vorteilhaft um ein Kohlenwasserstoffharz.

Zu hohe Polarität (zu geringe DACP-Werte) führt zu beginnender Verträglichkeit mit den Vinylaromatenblöcken, was zu Reduktion der Kohäsion und damit der Zugfestigkeit führen kann. Zu geringe Polarität (zu hohe DACP-Werte) führt zu Inkompatibilität des Klebharzes mit dem Weichblock und damit zu einem Verlust von Haftklebrigkeit.

Zu hohe Aromatizität (zu geringe MMAP-Werte) führt zu beginnender Verträglichkeit mit den Vinylaromatenblöcken, was zu Reduktion der Kohäsion und damit der Zugfestigkeit führen kann. Zu geringe Aromatizität (zu hohe MMAP-Werte) führt zu Inkompatibilität des Klebharzes mit dem Weichblock und damit zu einem Verlust von Haftklebrigkeit.

Die Harze werden bevorzugt aus den Harzklassen der (teil)hydrierten aromatisch modifizierten C5-Harze, der Polyterpen-Harze (hergestellt aus α-Pinen, β-Pinen, δ-Limonen oder Gemischen dieser Ausgangsstoffe), der teilhydrierten C9-Harze, der (teil)hydrierten aromatisch modifizierten α-Pinen-Harze, der (teil)hydrierten aromatisch modifizierten β-Pinen-Harze, der (teil)hydrierten aromatisch modifizierten δ-Limonen-Harze und der (teil)hydrierten aromatisch modifizierten Dipenten-Harze gewählt. Bei der aromatischen Modifizierung wird Styrol bevorzugt. Sehr bevorzugt werden Polyterpene-Harze.

### (c) Optional einsetzbare Weichharze

Optional ist ein Weichharz einsetzbar und dient zur finalen Feineinstellung der Kohäsions-/Adhäsions-Balance. Es handelt sich dabei sehr bevorzugt um ein Weichharz oder Weichharzgemisch mit einer Schmelzviskosität bei 25 °C und 1 Hz von zumindest 25 Pa*s, bevorzugt von zumindest 50 Pa*s und einer Erweichungstemperatur von < 25 °C. Die Schmelzviskosität wird nach Test VI bestimmt. Bei dem Weichharz kann es sich um ein Kolophonium basierendes oder sehr bevorzugt um ein Kohlenwasserstoff basierendes Weichharz handeln. Das Weichharz oder das Weichharzgemisch kommt in Bezug auf die Gesamtklebmasseformulierung mit einem Anteil von höchstens 12 Gew.-%, bevorzugt von höchstens 5 % bezogen auf die Gesamtklebemassezusammensetzung zum Einsatz. Ein zu hoher Anteil an Weichharz führt zu einer Verringerung der Kohäsion, was sich in der Halteleistung und in der Zugfestigkeit zeigt.

In HK2 sind aber auch niederviskose Weichmacher wie Mineralöle als Bestandteil der Haftklebemasseschicht HK2 im Sinne dieser Erfindung denkbar. Ihr Anteil in der Gesamtrezeptur liegt vorzugsweise bei höchstens 5 Gew.-%, bevorzugt bei höchstens 3 Gew.-%. Es kann auch auf solche Weichmacher vollständig verzichtet werden. Nachteilig an Weichmachern geringer Viskosität ist die Gefahr, dass saugfähige Verklebungsuntergründe wie Raufasertapete durchfettet werden können. Nach Wiederablösen des Klebestreifens bleibt ein unerwünschter optischer Eindruck an der Verklebungsstelle zurück. Bei Verklebung auf nicht saugfähigen Untergründen stellt sich dieses Problem nicht.

### Haftklebemasse HK3

Haftklebemassen vom Typ HK3 weisen ein ausgewogenes Verhältnis aus Reißfestigkeit und Halteleistung einerseits und Anpassungsfähigkeit an raue Verklebungsuntergründe andererseits auf. Der Vorteil dieser Haftklebemasse ist die Möglichkeit für symmetrische Aufbauten.

### (a) Elastomer (Blockcopolymer)

Als Elastomerkomponente (Blockcopolymerkomponente) kommt vorzugsweise zu mindestens 90 Gew.-% (bezogen auf den Gesamtblockcopolymergehalt), ein Polybutadien-Polyvinylaromaten-Blockcopolymer oder ein Gemisch aus verschiedenen Polybutadien-Polyvinylaromaten-Blockcopolymeren zum Einsatz. Dieses Polybutadien-Polyvinylaromaten-Blockcopolymer beziehungsweise diese Polybutadien-Polyvinylaromaten-Blockcopolymere sind solche, die Polymerblöcke überwiegend gebildet von Vinylaromaten (A-Blöcke), bevorzugt Styrol, und solche überwiegend gebildet durch Polymerisation von 1,3-Butadien (B-Blöcke) enthalten. Polybutadien-Blockcopolymere (SBS) werden im Sinne dieser Erfindung auf Grund ihrer höheren Stabilität gegenüber äußeren Einflüssen wie z. B. Ozon im Vergleich zu Polyisopren-Blockcopolymeren (SIS) bevorzugt.

Das Elastomergemisch enthält zumindest ein Polybutadien-Polyvinylaromaten-Blockcopolymer bestehend aus einem A-Block und einem B-Block, dem sogenannten Diblockcopolymer. Diblockcopolymere tragen zu Tack und Auffließvermögen der Klebemasse bei. Das Elastomergemisch enthält zudem ein Triblockcopolymer oder ein höheres Multiblockcopolymer mit zumindest zwei A-Blöcken und zumindest einem B-Block. Dieses kann als Triblockcopolymer eine lineare A-B-A-Struktur aufweisen. Einsetzbar sind ebenfalls Blockcopolymere von radialer Gestalt sowie sternförmige und lineare Multiblockcopolymere. Triblock- und Multiblockcopolymere tragen zu Kohäsion und Zugfestigkeit der Klebemasse bei. Es können mehrere verschiedene Diblockcopolymere eingesetzt werden. Es können mehrere Triblock- und/oder Multiblockcopolymere eingesetzt werden.

Der Gesamtblockcopolymergehalt in der Klebemasse liegt bei mindestens 38 Gew.-% und bei höchstens 48 Gew.-%. Deutlich geringere Anteile an Elastomer führen zu nicht ausreichender Kohäsion, was sich in reduzierter Halteleistung und/oder reduzierter Reißfestigkeit beim unter dehnendem Verstrecken durchgeführten Ablöseprozess äußert. Deutlich höhere Anteile an Elastomer führen zu einem Abfall an Verklebungsfestigkeit insbesondere auf unpolaren Untergründen wie zum Beispiel unpolarer Anstreichfarbe. Der Anteil an Diblockcopolymeren bezogen auf den Gesamtblockcopolymergehalt in der Klebemasseformulierung liegt bei mindestens 10 Gew.-% und bei höchstens 30 Gew.-%. Deutlich höhere Diblockanteile führen zu nicht ausreichender Kohäsion, was sich in reduzierter Halteleistung und/oder reduzierter Reißfestigkeit beim unter dehnendem Verstrecken durchgeführten Ablöseprozess äußert. Deutlich geringere Diblockanteile führen zu einem Abfall an Verklebungsfestigkeit insbesondere auf unpolaren Untergründen wie zum Beispiel unpolarer Anstreichfarbe. Entsprechend beträgt der Anteil an Tri- oder höherem Multiblockcopolymer von 70 Gew.-% bis 90 Gew.-% in Bezug auf den Gesamtblockcopolymergehalt. Unter den Tri- oder höheren Multiblockcopolymeren sind die Triblockcopolymere besonders bevorzugt.

Die gewichtsmittlere Molmasse (gemessen nach Test I) der Blockcopolymere liegt zwischen 50 000 g/mol und 500 000 g/mol, bevorzugt zwischen 75 000 g/mol und 200 000 g/mol. Der Anteil an Vinylaromatenblock in den Blockcopolymeren kann von Blockcopolymersorte zu Blockcopolymersorte in der Formulierung unterschiedlich sein, liegt aber typischerweise bei mindestens 20 Gew.-%, bevorzugt bei mindestens 25 Gew.-% und höchstens bei 40 Gew.-%, bevorzugt höchstens bei 35 Gew.-%. Ein zu geringer Polyvinylaromatenanteil führt zu unzureichender physikalischer Vernetzung, die in den Polybutadien-Blockcopolymeren durch Mikrophasenseparation geschaffen wird. Die physikalische Vernetzung ist für die Halteleistung und die Reißfestigkeit wichtig. Bei einem zu hohen Polyvinylaromatenanteil dagegen verliert die Klebemasse an Klebrigkeit.

Vorzugsweise besitzen die Blockcopolymere der Haftklebmassen als A-Blöcke Polystyrolendblöcke. Anstelle der bevorzugten Polystyrolblöcke können als Vinylaromaten auch Polymerblöcke auf Basis anderer aromatenhaltiger Homo- und Copolymere (bevorzugt C8- bis C12-Aromaten) mit Glasübergangstemperaturen von größer 75 °C genutzt werden wie zum Beispiel α-methylstyrolhaltige Aromatenblöcke. Weiterhin können auch gleiche oder unterschiedliche A-Blöcke enthalten sein. Glasübergangstemperaturen werden nach Test II bestimmt.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 40 °C, insbesondere mindestens 60 °C und für B-Blöcke höchstens -50 °C insbesondere höchstens -80 °C) wider. Diese Angaben beziehen sich auf die reinen, unabgemischten Blockcopolymere.

Die aus den A- und B-Blöcken resultierenden Polybutadien-Blockcopolymere können gleiche oder unterschiedliche B-Blöcke enthalten und zwar im Hinblick auf Mikrostruktur (relatives Verhältnis der für Polybutadien möglichen Monomerverknüpfungsarten 1,4-cis, 1,4-trans, 1,2-vinyl: bevorzugt ist ein 1,4-Anteil (cis + trans) von > 75 %, sehr bevorzugt von > 85 % bezogen auf die Polybutadienblöcke und ein 1,4-cis-Anteil von > 40 % bezogen auf die Polybutadienblöcke) und/oder Kettenlänge. Ein hoher Anteil an 1,4-Verknüpfung und insbesondere 1,4-cis-Verknüpfung der Monomereinheiten in den PolybutadienBlöcken führt zu vorteilhafter Zug/Dehnungs-Charakteristik, so dass eine ausreichende Dehnbarkeit resultiert, die insbesondere für das unter Verstreckung rückstandsfreie Wiederablösen wichtig ist. Die 1,2-vinyl-Einheiten können hydriert sein. Die 1,4-Einheiten sind vorteilhafterweise im Wesentlichen nicht hydriert.

### (b) Klebharz

Bei dem verwendeten zumindest einen Klebharz handelt es sich um ein Kohlenwasserstoffharz mit einem DACP-Wert (nach Test III) von mindestens etwa +5 °C und höchstens etwa +50 °C, bevorzugt von höchstens etwa +45 °C sowie einem MMAP-Wert (nach Test IV) von mindestens etwa +50 °C und höchstens etwa +85 °C, bevorzugt von höchstens etwa +80 °C. Das Klebharz weist eine Harzerweichungstemperatur (nach Test V) von mindestens etwa 90 °C und höchstens +140 °C, bevorzugt von mindestens etwa 110 °C und höchstens +120 °C auf. Klebharze sind spezielle Verbindungen mit im Vergleich zu den Elastomeren niedriger Molmasse mit einem typischen Molekulargewicht (Test I) Mw < 5 000 g/mol. Typischerweise beträgt das Molekulargewicht Mw von 500 bis 5 000 g/mol, bevorzugt von 500 bis 2 000 g/mol. Bei entsprechend ausgewählten Klebharzen ist Kompatibilität mit den Polybutadienblöcken und Inkompatibilität mit Polyvinylaromatenblöcken in im Sinne dieser Erfindung günstiger Ausprägung zu erwarten.

Zu hohe Polarität (zu geringe DACP-Werte) führt zu beginnender Verträglichkeit mit den Vinylaromatenblöcken, was zu Reduktion der Kohäsion und damit der Zugfestigkeit führen kann. Zu geringe Polarität (zu hohe DACP-Werte) führt zu Inkompatibilität des Klebharzes mit dem Weichblock und damit zu einem Verlust von Haftklebrigkeit.

Zu hohe Aromatizität (zu geringe MMAP-Werte) führt zu beginnender Verträglichkeit mit den Vinylaromatenblöcken, was zu Reduktion der Kohäsion und damit der Zugfestigkeit führen kann. Zu geringe Aromatizität (zu hohe MMAP-Werte) führt zu Inkompatibilität des Klebharzes mit dem Weichblock und damit zu einem Verlust von Haftklebrigkeit.

Die Harze werden bevorzugt aus den Harzklassen der (teil)hydrierten aromatisch modifizierten C5-Harze, der Polyterpen-Harze (hergestellt aus α-Pinen, β-Pinen, δ-Limonen oder Gemischen dieser Ausgangsstoffe), der teilhydrierten C9-Harze, der (teil)hydrierten aromatisch modifizierten α-Pinen-Harze, der (teil)hydrierten aromatisch modifizierten β-Pinen-Harze, der (teil)hydrierten aromatisch modifizierten δ-Limonen-Harze und der (teil)hydrierten aromatisch modifizierten Dipenten-Harze gewählt. Bei der aromatischen Modifizierung wird Styrol bevorzugt. Sehr bevorzugt werden Polyterpene-Harze.

### (c) Weichharze

Das Weichharz dient zur finalen Feineinstellung der Kohäsions-/Adhäsions-Balance. Es handelt sich dabei sehr bevorzugt um ein Weichharz oder Weichharzgemisch mit einer Schmelzviskosität bei 25 °C und 1 Hz von zumindest 25 Pa*s, bevorzugt von zumindest 50 Pa*s und einer Erweichungstemperatur von < 25 °C. Die Schmelzviskosität wird nach Test VI bestimmt. Bei dem Weichharz kann es sich sehr bevorzugt um ein Kolophonium basierendes oder um ein Kohlenwasserstoff basierendes Weichharz handeln. Das Weichharz oder das Weichharzgemisch kommt in Bezug auf die Gesamtklebmasseformulierung jeweils, aber unabhängig voneinander, mit einem Anteil von 2 Gew.-%, bevorzugt von mindestens 5 Gew.-% und höchstens 15 Gew.-%, bevorzugt höchstens 12 Gew.-% bezogen auf die Gesamtklebemassezusammensetzung zum Einsatz. Ein zu hoher Anteil an Weichharz führt zu einer Verringerung der Kohäsion, was sich in der Halteleistung und in der Zugfestigkeit zeigt.

Übliche niederviskose Weichmacher wie Mineralöle sind im Sinne dieser Erfindung unvorteilhaft. Ihr Anteil in der Gesamtrezeptur liegt vorzugsweise bei höchstens 1 Gew.-%, bevorzugt wird auf solche Weichmacher vollständig verzichtet. Nachteilig an Weichmachern geringer Viskosität ist die Gefahr, dass saugfähige Verklebungsuntergründe wie Raufasertapete durchfettet werden können. Nach Wiederablösen des Klebestreifens bleibt ein unerwünschter optischer Eindruck an der Verklebungsstelle zurück.

### Optionale weitere Additive

Für alle vorgenannten Klebemassen HK1, HK2 und HK3 können jeweils, aber unabhängig voneinander als weitere Additive vor allem Schutzmittel zugesetzt werden. Hier seien Alterungsschutzmittel primärer und sekundärer Art, Prozessstabilisatoren, Licht- und UV-Schutzmittel sowie Flammschutzmittel genannt und auch Füllstoffe, Farbstoffe und Pigmente. Die Klebemasse kann so beliebig gefärbt oder weiß, grau oder schwarz sein.

Typische Einsatzmengen für ein Additiv liegen bei bis zu 1 Gew.-% bezogen auf die Gesamtklebemassezusammensetzung. Besonders vorteilhaft sind Alterungsschutzmittel, die keine farbigen Rückstände auf Verklebungsuntergründen zurücklassen.

Füllstoffe können höher dosiert werden, und zwar typischerweise zu einem Anteil von bis 5 Gew.-% bezogen auf die Gesamtklebemassezusammensetzung.

Als Additive können typischerweise genutzt werden:
- primäre Antioxidantien wie zum Beispiel sterisch gehinderte Phenole
- sekundäre Antioxidantien, wie zum Beispiel Phosphite oder Thioether
- Prozessstabilisatoren wie zum Beispiel C-Radikalfänger
- Flammschutzmittel
- Lichtschutzmittel wie zum Beispiel UV-Absorber oder sterisch gehinderte Amine
- Farbstoffe und/oder Pigmente (wie z. B. Ruß)
- Verarbeitungshilfsmittel
- (Nano)Füllstoffe wie zum Beispiel Siliziumdioxid, Aluminiumoxid, Titandioxid oder Schichtsilikate, ebenso Farbpigmente und Farbstoffe (für transparente aber gezielt gefärbte Ausgestaltungen) sowie optische Aufheller
- Endblockverstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine.

Die Auswahl von Additiven beschränkt sich vorzugsweise auf die oben genannten.

Bei den erfindungsgemäßen Klebstreifen handelt es sich um ein- und insbesondere um doppelseitig haftklebrige Selbstklebeprodukte, insbesondere um gestanzte oder in anderer Weise zugeschnittene Klebeband- oder Folienabschnitte (Klebestrips). Klebestrips können in beiden Dimensionen beliebige Ausmaße annehmen. Sie weisen typischerweise eine Länge von mindestens 5 mm auf. Längen können auch bei 10 mm, 20 mm, 50 mm, 100 mm oder darüber liegen. Breiten liegen typischerweise bei mindestens 2 mm. Breiten können auch bei 5 mm, 10 mm, 20 mm, 50 mm oder darüber liegen.

Die Klebstreifen können dabei einen Träger (insbesondere einen Schaumstoffträger) aufweisen, wobei der Träger ein- oder beidseitig mit Haftklebemasse versehen ist. Die Klebstreifen können jedoch auch sogenannte "Transferklebebänder" sein, das heißt ein Klebeband ohne Träger bzw. trägerlos. Bei den Klebstreifen sind die nach außen gerichteten Klebmassenoberflächen vor der Applikation zwischen flexiblen Linern, z.B. silikonisiertes Papier oder silikonisierte Folie, aufgebracht, die mit einer Trennschicht versehen sind und/oder anti-adhäsive Eigenschaften aufweisen. Zur Applikation wird regelmäßig zunächst ein Liner entfernt, der Klebestreifen mit der freigelegten Kleboberfläche appliziert und dann der zweite Liner entfernt. Die Klebemasse kann so direkt zur Verbindung zweier Oberflächen verwendet werden. Mit einem solchen erfindungsgemäßen haftklebrigen Klebstreifen wird eine in Positionierung und Dosierung sehr genaue Verklebung ermöglicht.

Die Klebestrips sind üblicherweise länger als breit, wobei die Verstreckung zum Wiederablösen dann vorteilhaft entlang der Längsachse liegt. Alle Winkel der Stanzlinge können 90° betragen oder davon abweichen. Es sind auch Formen möglich, bei denen sich der Klebestrip in zumindest eine Richtung verjüngt und insbesondere zu einer Spitze zuläuft. Kanten können auch rund gestaltet sein.

Die Klebestrips enthalten Anfasserbereiche, die zur Ober- und/oder Unterseite des Klebestrips nicht klebrig sind. Dieser Bereich dient als Anfasser, an dem gezogen wird, um das dehnende Verstrecken insbesondere in der Verklebungsebene zu erzielen, und ist daher bevorzugt auf beiden Seiten nicht haftklebrig ausgerüstet, insbesondere durch das Aufbringen von Schichten aus Metall, Kunststoff- oder Papier, wie oben beschrieben. Der Anfasserbereich kann jedoch auch durch Bestrahlung, Bepuderung oder Neutralisation der Klebemasse erzeugt werden. Alternativ kann ein Lack oder ein Primer an den entsprechenden Stellen aufgetragen werden. Zudem kann die Oberfläche durch chemische Behandlung wie Ätzen verändert werden, um jeweils nichtklebende Zonen zu erzeugen.

Produktdicken können bei mindestens 100 µm und höchstens 2500 µm liegen, bevorzugt bei mindestens 500 µm und höchstens 1800 µm.

Klebmasseschichten können bei mindestens 25 µm und höchstens 1500 µm liegen, bevorzugt bei mindestens 50 µm und höchstens 700 µm.

Die Rauigkeit der Anfasserfolie hat sich als besonders vorteilhaft erwiesen, wenn sie im Bereich Sa von 0,10 bis 2,00 µm, bevorzugt von 0,15 bis 0,80 µm, weiter bevorzugt 0,3 bis 0,8 µm, besonders bevorzugt 0,5 bis 0,8 µm liegt. Sie sorgt dann für einen guten Klebverbund zwischen Folie und Haftklebstoff. Die Rauheit ist dabei gemäß ISO 25178-2:2012(E) Abschnitt 4.1.7 definiert. Anfasserfolien mit einer derartigen Rauigkeit weisen zudem eine vorteilhafte Griffigkeit auf.

Zu den vielfältigen Anwendungen der erfindungsgemäßen Klebstreifen zählen Verklebungen auf Wänden, und zwar nicht nur auf glatten, ebenen Untergründen, sondern, insbesondere wenn HK1 und HK3 als Klebemasse genutzt werden, auch auf verschiedenen rauen Flächen wie Putz oder Raufasertapete, insbesondere gestrichener Raufasertapete. Auch für eine Verklebung auf anderen rauen und/oder leicht spaltbaren Oberflächen wie Holz, Strukturtapeten; Paneelen oder Wandtafeln, sind die Klebstreifen der vorliegenden Erfindung besonders geeignet. Ferner können Gegenstände, auch mit hohem Gewicht, befestigt werden, ohne den Untergrund (die Wand) zu beschädigen. Damit wird den Schwierigkeiten, die bei der Verklebung z.B. auf gestrichener Raufasertapete im Vergleich zu vielen anderen Untergründen auftreten, begegnet, die da insbesondere sind:
(a) Raufasertapete stellt einen nicht glatten Verklebungsuntergrund dar (typische Rauigkeiten bei Raufasertapete können im Bereich von 500 µm oder sogar darüber liegen),
(b) die Oberfläche der Raufasertapete ist üblicherweise mit einer Anstreichfarbe versehen, die durch Bindemittel und/oder Additive bedingt eine geringe Oberflächenenergie aufweisen kann,
(c) insbesondere Raufasertapete stellt einen relativ leicht spaltbaren Verklebungsuntergrund dar, der beim Wiederablösen nicht beschädigt werden soll.

Je nach Art der Anstreichfarbe können die Oberflächeneigenschaften stark variieren. Für andere der oben angeführten beispielhaften Untergründe gelten alle oder einige dieser Herausforderungen in ähnlicher Weise. Die erfindungsgemäßen Klebstreifen, vor allem wenn sie HK1 oder HK3 enthalten, meistern diese Herausforderungen und stellen sicher, dass sie sich durch dehnendes Verstrecken rückstandsfrei und möglichst zerstörungsfrei von gestrichenem Putz oder anderen rauen Oberflächen ablösen lassen.

Für die Herstellung des Anfasserbereiches des Klebstreifens stehen verschiedene Verfahren zur Verfügung:
(1) Auftragen einer Substanz beispielsweise flüssig auf den Bereich des Haftklebprodukts, welcher nicht mehr klebend sein soll, wobei die flüssige Substanz chemisch oder physikalisch eine nicht klebende Fläche ausbildet. Typisch zum Aufbringen der Substanz sind klassische Beschichtungsverfahren, Abscheideprozesse z.B. aus der Dampfphase oder Bedruckung.
(2) Auftragen einer dünnen nicht klebenden oder einseitig klebenden Schicht, wobei die klebende Seite in Richtung Haftklebprodukt zeigen würde.

Das Verfahren (1) ist verhältnismäßig zeitaufwendig. Die Substanz muss aufgetragen werden und vor dem nächsten Produktionsschritt die nicht klebende Fläche ausbilden. Abhängig vom Verfahren z.B. bei Abscheideprozessen aus der Dampfphase können die Anschaffungskosten für den Prozessschritt über denen des Verfahrens 2 liegen. Abhängig vom Verfahren besteht geringe/keine Flexibilität bei der Haptik und/oder der Optik des nicht klebrigen Bereichs.

Das Verfahren (2) ist prozessstabil und wirtschaftlich. Gegenüber Verfahren (1) kann nach dem Auftragen der Schicht, das Produkt sofort weiterverarbeitet werden. Ein weiterer Vorteil liegt in der Flexibilität. Die Schicht kann behandelt bzw. schnell und ohne viel Aufwand gegen eine andere Schicht ausgetauscht werden. Eine mögliche Behandlung der Schicht könnte eine Bedruckung oder eine Ätzung sein, welche im Verfahren von anderen entkoppelt werden kann. Ferner gibt es bei Verfahren (2) keine Emissionen.

### Testmethoden

### Test I - DACP-Wert

Zur Bestimmung von DACP-Werten wird auf C. Donker, PSTC Annual Technical Seminar, Proceedings, S. 149-164, Mai 2001, verwiesen.

### Test II - MMAP-Wert

Zur Bestimmung von MMAP-Werten wird auf C. Donker, PSTC Annual Technical Seminar, Proceedings, S. 149-164, Mai 2001, verwiesen.

### Test III - Harzerweichungstemperatur

Die Klebharzerweichungstemperatur wird nach der einschlägigen Methodik durchgeführt, die als Ring & Ball bekannt ist und nach ASTM E28 standardisiert ist.

### Test IV - Schmelzviskosität von Weichharzen

Zur Bestimmung der Schmelzviskosität der Weichharze wurde ein Schubspannungssweep in einem schubspannungsgeregelten DSR 200 N Rheometer der Firma Rheometrics Scientific in Rotation durchgeführt. Es kam ein Kegel/Platte-Messsystem mit einem Durchmesser von 25 mm (Kegelwinkel 0,1002 rad) zur Anwendung, der Messkopf war luftgelagert und geeignet für Normalkraftmessungen. Der Spalt betrug 0,053 mm und die Messtemperatur 25 °C. Die Frequenz wurde von 0,002 Hz bis 200 Hz variiert und die Schmelzviskosität bei 1 Hz registriert.

### Test V - Trennkraft zwischen Klebmasse und Abdeckung

Die Messung der Trennkraft erfolgt nach ASTM D3330/D3330M - 04/ Testmethode D, Probenbreite: 20 mm

### Test VI - Rauheitswerte (Sₐ)

Die Oberflächenrauheit der Anfasserschicht wurde mit einem Weißlicht-Interferometer Contour GT® 3D Optical Microscope der Firma Bruker bestimmt. Es lag die ISO 25178-602 zu Grunde. Das Gerät wurde im Vertical Scanning- (VSI-) Modus betrieben. Es wurde ein 50x-Objektiv und eine 1x-Feldlinse genutzt, so dass eine fünfzigfache Vergrößerung resultierte. Der Sichtbereich betrug 317 µm x 238 µm. Auf diese Fläche bezieht sich auch die ausgewertete Oberflächenrauheit Sₐ. Aus dem optisch aufgenommenen Höhenprofil wurde aus den Rohdaten gemäß ISO 25178-2:2012 (E) Abschnitt 4.1.7 die Oberflächenrauheit als Mittelwert des 3D-Profils Sₐ erhalten. Sₐ ist das arithmetische Mittel der Beträge der Höhenwerte z aller in der x,y-Ebene des Sichtbereichs liegenden vermessenen Punkte. Es wurden jeweils drei Messungen durchgeführt und der Mittelwert der Einzelmessungen in nm angegeben. Der Abstand der vermessenen Punkte zueinander betrug sowohl in x- als auch in y-Richtung 0,5 µm.

### Test VII - Ozonstabilität

Eine Klebmasse ist ausreichend ozonstabil, wenn sie Ozontest 1 und 2 besteht.

Im Ozontest 1 werden die Klebmassen im gedehnten Zustand auf ihre Ozonbeständigkeit untersucht. Das Haftklebprodukt wird beidseitig vom Trennpapier entfernt und im gedehnten Zustand (100 % Dehnung) auf eine inerte Oberfläche eines Substrats (z.B. eine Glasscheibe) gedrückt, mit Trennpapier abgedeckt und mit einer 2 kg Gummirolle angerollt. Anschließend wird das Trennpapier wieder entfernt und die Probe in den Ozonschrank gelegt. Ist der Ozonschrank verriegelt kann mit der Temperierung und der Ozonbelastung gestartet werden.

Im Ozontest 2 werden die Klebmassen unter Kippscherbelastung auf ihre Ozonbeständigkeit untersucht.

Ozontest 1 und Ozontest 2 werden bei 25 °C/Umgebungsfeuchte und einer Ozonkonzentration von 50 pphm (das entspricht 997 µg/m³) durchgeführt. Dauer Ozontest 1: 72 h. Dauer Ozontest 2: 10.000 Minuten. Zum Vergleich: Ab einem Ozonwert von 180 µg/m³ in der Luft (das entspricht 9 pphm) werden über die Medien Verhaltensempfehlungen an die Bevölkerung gegeben (Quelle: Internetseite des Umwelt Bundesamts).

Der Ozontest ist ein Schnelltest. In der Regel ist in Deutschland die Ozonkonzentration kleiner 100 µg/m³. Im Ozonschrank sind die Proben damit einer mehr als 10-fach höheren Konzentration an Ozon ausgesetzt als in der Umgebungsluft. Dafür sind die Proben dem Ozon nur 72 h bzw. 10.000 Minuten ausgesetzt. Im Vergleich mit Proben, die der Ozonbelastung nicht ausgesetzt waren, ist visuell schnell zu erkennen, ob die Klebmasse ozonstabil ist oder nicht. Ist keine Veränderung der Proben mit und ohne Ozonbelastung zu erkennen, ist die Masse ozonstabil. Sind aber Risse, Krater, ein Abfallen des Anfassers oder andere Veränderungen zu beobachten, ist sie nicht ozonstabil. Bei den Proben des Ozontests 2 wird zusätzlich nach Entnahme aus der Prüfkammer das Wiederablösen gemäß des Test X vollzogen (identischer Ablauf nach 24 Stunden Konditionierung bei 23 °C und 50 % rel. Luftfeuchte). Ein Reißen des Klebstreifens während des Ablösevorganges deutet auf Ozonschädigungen hin.

### Test VIII - Kippschertest

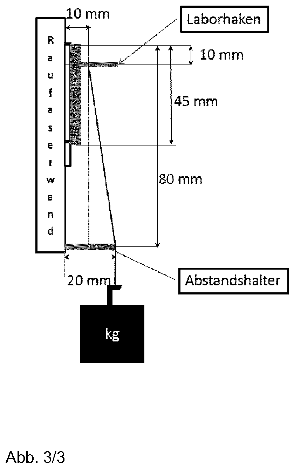

Zur Bestimmung der Kippscherfestigkeit wird das zu prüfende Prüfmuster der Abmessung 20 mm x 50 mm, welches an einem Ende beidseitig mit einem nicht haftklebrigen Anfasserbereich versehen ist, zunächst auf eine mit Raufasertapete (Typ Erfurt 52 mit Alpina Weiß gestrichen (Lammfellrolle)) ausgerüsteten Substratplatte verklebt (Andruckzeit = 5 sec) und fest angedrückt. Der Anfasser zeigt nach oben. Auf die Rückseite des Klebestreifens wird mittig eine Basisplatte aus PVC der Abmessung 45 mm x 24 mm x 4 mm (Länge x Breite x Dicke) verklebt. Auf die Basisplatte wird ein 10 cm langer Stahlstift in eine entsprechend vorgesehene Gewindebohrung geschraubt. Der Mittelpunkt der Gewindebohrung befindet sich mittig 10 mm unterhalb der Basisplattenoberkante (Abb. 3). Die Basisplatte wird auf den zuvor auf den Testuntergrund aufgebrachten Testklebestreifen für 5 s mit 100 N gepresst, bevor der Stahlstift eingeschraubt wird. Es wird noch ein Abstandshalter, der das Gewicht um 20 mm vom Testuntergrund beabstandet 80 mm unterhalb der Basisplattenoberkante positioniert. Der Verbund wird 5 min unbelastet äquilibriert. Nach Beaufschlagung der gewählten Kippscherbelastung durch Anhängen eines Gewichtes (15 N bei 10 mm Hebelarm) wird die Ozon-Beaufschlagung der Prüfkammer vorgenommen.

### Test IX - Ablösen des Strips von empfindlichen Untergründen

Auf eine Raufasertapete (Typ Erfurt 52 mit Alpina Weiß gestrichen (Lammfellrolle)) wurde das Haftklebprodukt 5 s mit 100 N bei 23 °C +/- 3 °C anpresst. Anschließend wurden die Muster bei 40 °C im Trockenschrank gelagert, damit die Klebmasse gut auf den Prüfuntergrund (die Raufasertapete) aufzieht. Nach zwei Wochen wurden die Muster aus dem Trockenschrank genommen und 24 h bei 23 °C und 50 % rel. Luftfeuchte konditioniert. Sind die Muster konditioniert, werden von 10 Probanden jeweils 5 Muster manuell parallel zum Prüfuntergrund gezogen. Alle Auffälligkeiten beim Abziehen wie Beschädigung des Prüfuntergrunds, Abrutschen vom Anfasser, Nachgreifversuche und ähnliches werden notiert.

### Test X - Bestimmung der Trennkraft

Die Trennkraft wird an einer Verklebung von 20 mm breiten und 220 mm langen Teststreifen bestimmt. Die offene Klebemassenseite der Verklebung wird dabei
a) mit einem ebenfalls 20 mm breiten und 25 µm dicken Streifen aus Aluminium abgedeckt. Bei Trennkräften über 0,20 N/cm wird so ein Dehnen des Klebprodukts verhindert,
b) nicht abgedeckt, wenn die Abzugskräfte ≤ 0,20 N/cm sind.

Die Teststreifen werden auf eine Länge von 220 mm zugeschnitten und für zwei Stunden bei einem Prüfklima von 23 ± 1 °C und 50 ± 5 % rel. Luftfeuchte gelagert. Für die Messung wird die Folie, deren Trennkraft zur Klebmasse getestet werden soll, klebmassefrei in die obere Klemmbacke einer Zugprüfmaschine (z.B. Fa. Zwick) analog zu einem T-Peel Test eingespannt. Das Klebprodukt ggf. mit dem Aluminiumstreifen wird in der unteren Klemmbacke eingespannt. Der Klemmbackenabstand beträgt dabei 50 mm. Die Messung erfolgt mit einer Prüfgeschwindigkeit (=Traversengeschwindigkeit) von 300 mm/min, mit der die Klemmbacken bei einem Winkel von 180° auseinander gefahren werden. Die über eine Strecke von 150 mm ermittelte Mittelwert der für die Trennung der Verklebung benötigten Kraft entspricht der Trennkraft. Der Vormessweg beträgt 30 mm. Für die Messung wurde eine 100 N Kraftmessdose verwendet. Prüfklima: 23 ± 1 °C und 50 ± 5 % rel. Luftfeuchte. Die Messwerte sind in N/cm angegeben und gemittelt aus zwei Messungen.

### Beispiele

### Musterpräparation

Alle Knetmassen wurden in einem beheizbaren Doppelsigmakneter der Firma Aachener Maschinenbau Küpper Typ III-P1 hergestellt. Der Mantel des Kneters wurde durch ein Thermalölheizbad der Firma Lauda erwärmt. Hierbei wurde eine Badtemperatur von 190 °C eingestellt. Während des gesamten Knetvorgangs lag eine CO₂-Schutzgasatmosphäre an. Der Kneter wurde bei 50 U/min betrieben.

Zunächst wurden die Elastomere zusammen mit dem festen Alterungsschutzmittel Irganox 1010 eingewogen und im Kneter vorgelegt. Danach wurden etwa 10 % der Menge an Festharz zugegeben und für 15 Minuten geknetet. Nachfolgend wurde im Abstand von jeweils 10 Minuten jeweils ein Drittel der verbleibenden Menge an Klebharz sowie schließlich Weichharz zugegeben und eingearbeitet.

Nach Abschluss des Knetvorgangs wurden die Knetmassen dem Kneter entnommen und auf Raumtemperatur erkalten lassen.

Die erkalteten Massen wurden zwischen zwei Lagen silikonisiertem Trennpapier positioniert und mit einer Heißpresse der Firma Lauffer GmbH & CO KG Typ RLKV 25 bei 130 °C zu Handmustern mit einer Schichtdicke von 650 µm oder 250 µm (je nach durchzuführendem Test) verpresst. Die 250 µm Schichten wurden beidseitig auf einen Schaumstoffträger kaschiert. Dies erfolgte manuell mit einer Gummiandruckrolle. Die Muster wurden für 2 Wochen bei 23 °C und 50 % rel. Luftfeuchtigkeit gelagert, um eine gute Verankerung zwischen Klebeschichten und Schaumträger zu erreichen.

### Eingesetzte Rohstoffe

| | | Typ | Hersteller | Charakterisierung |
|---|---|---|---|---|
| Elastomere | Kraton D1102 AS | Polystyrol-Polybutadien Blockcopolymer | Kraton Polymers | Triblockcopolymer mit 17 %* Diblock |
| | Kraton D1118 ES | Polystyrol-Polybutadien Blockcopolymer | Kraton Polymers | Triblockcopolymer mit 78 %* Diblock |
| | Kraton D1165 PT | Polystyrol-Polyisopren-Blockcopolymer | Kraton Polymers | Triblockcopolymer mit 16 %* Diblock |
| Klebharze | Dercolyte A115 | α-Pinen Harz | DRT | |
| | Piccolyte A115 | α-Pinen Harz | Pinova | |
| | Regalite R7100 | teilhydriertes | Eastman | |
| | Regalite S5090 | KohlenwasserstoffHarz | | |
| Weich harze | Wingtack 10 | C5-Harz | Cray Valley | |
| Alterungsschu tz-mittel | Irganox 1010 | Sterisch gehindertes Phenol | BASF | |

| | | | | |
|---|---|---|---|---|
| *) cf. Produktinformation Kraton "The Global Connection for Polymer and Compound Solutions - Product and Application Guide" (KPP/TPG/2011) von 2011. | | | | |

### Beispiel 1 (Vergleich, enthält SIS)

| | | | Gew.-% |
|---|---|---|---|
| Elastomer | Kraton D1165 PT | Polystyrol-Polyisopren-Blockcopolymer | 24,00 % |
| | Kraton D1102 AS | Polystyrol- Polybutadien - Blockcopolymer | 24,0 % |
| Klebharz 1 | Dercolyte A115 | nichthydriertes Kohlenwasserstoffharz | 48,00 % |
| Weichharz | Wingtack 10 | aliphatisches Kohlenwasserstoffharz | 3,50 % |
| Weitere Bestandteile | Irganox 1010 | Antioxidationsmittel | 0,50 % |

Gesamtelastomergehalt 48,0 Gew.-%; Diblock-Anteil vom Gesamtblockcopolymer 18,5 Gew.-%; Weichharz-Gehalt 3,5 Gew.-%.

### Beispiel 2 (Typ Haftklebmasse HK1)

| | | | |
|---|---|---|---|
| Elastomer | Kraton D1102 AS | Polystyrol-Polybutad ien-Blockcopolymer | 21,5 Gew.-% |
| | Kraton D1118 ES | Polystyrol-Polybutad ien-Blockcopolymer | 28,0 Gew.-% |
| Klebharz | Dercolyte A115 | Alpha-Pinen-Harz | 45,0 Gew.-% |
| Weichharz | Wingtack 10 | aliphatisches Kohlenwasserstoffharz | 5,0 Gew.-% |
| Weitere Bestandteile | Irganox 1010 | Antioxidationsmittel | 0,5 Gew.-% |

Gesamtelastomergehalt 49,5 Gew.-%; Diblock-Anteil 51,5 Gew.-%; Weichharz-Anteil 5,0 Gew.-%.

### Beispiel 3 (Typ Haftklebemasse HK2)

| | | | |
|---|---|---|---|
| Elastomer | Kraton D1102 AS | Polystyrol-Polybutad ien-Blockcopolymer | 42,0 Gew.-% |
| | Kraton D1118 ES | Polystyrol-Polybutad ien-Blockcopolymer | 10,0 Gew.-% |
| Klebharz | Dercolyte A115 | Alpha-Pinen-Harz | 43,5 Gew.-% |
| Weichharz | Wingtack 10 | aliphatisches Kohlenwasserstoffharz | 4,0 Gew.-% |
| Weitere Bestandteile | Alterungsschutzmittel | Antioxidationsmittel | 0,50 Gew.-% |

Gesamtelastomergehalt 52,0 Gew.-%; Diblock-Anteil vom Gesamtblockcopolymer 28,7 Gew.-%; Weichharz-Anteil 4,0 Gew.-%

### Beispiel 4 (Typ Haftklebemasse HK3)

| | | | |
|---|---|---|---|
| Elastomer | Kraton D1102 AS | Polystyrol-Polybutad ien-Blockcopolymer | 38,0 Gew.-% |
| | Kraton D1118 ES | Polystyrol-Polybutad ien-Blockcopolymer | 10,0 Gew.-% |
| Klebharz | Regalite R7100 | teilhydriertes Kohlenwasserstoffharz | 38,0 Gew.-% |
| | Regalite S5090 | teilhydriertes Kohlenwasserstoffharz | 10,0 Gew.-% |
| Weichharz | Wingtack 10 | aliphatisches Kohlenwasserstoffharz | 3,5 Gew.-% |
| Weitere Bestandteile | Irganox 1010 | Antioxidationsmittel | 0,50 Gew.-% |

Gesamtelastomergehalt 48,0 Gew.-%; Diblock-Anteil vom Gesamtblockcopolymer 29,7 Gew.-%; Weichharz-Anteil 3,5 Gew.-%.

### Beispiel 5 (Typ Haftklebemasse HK3)

| | | | |
|---|---|---|---|
| Elastomer | Kraton D1102 AS | Polystyrol-Polybutad ien-Blockcopolymer | 45,0 Gew.-% |
| Klebharz | Piccolyte A115 | Alpha-Pinen-Harz | 44,5 Gew.-% |
| Weichharz | Wingtack 10 | aliphatisches Kohlenwasserstoffharz | 10,0 Gew.-% |
| Weitere Bestandteile | Irganox 1010 | Antioxidationsmittel | 0,50 Gew.-% |

Gesamtelastomergehalt 45,0 Gew.-%; Diblock-Anteil 17,0 Gew.-%; Weichharz-Anteil 10,0 Gew.-%.

### Beispiel 6 (Vergleich, enthält nicht erfindungsgemäßen Diblockanteil)

| | | | |
|---|---|---|---|
| Elastomer | Kraton D1118 ES | Polystyrol-Polybutad ien-Blockcopolymer | 45,0 Gew.-% |
| Klebharz | Piccolyte A115 | Alpha-Pinen-Harz | 44,5 Gew.-% |
| Weichharz | Wingtack 10 | aliphatisches Kohlenwasserstoffharz | 10,0 Gew.-% |
| Weitere Bestandteile | Irganox 1010 | Antioxidationsmittel | 0,50 Gew.-% |

Gesamtelastomergehalt 45,0 Gew.-%; Diblock-Anteil 78,0 Gew.-%; Weichharz-Anteil 10,0 Gew.-%.

Es wurden zwei unterschiedliche Anfassertypen (erfindungsgemäß/ nicht erfindungsgemäß) eingesetzt. Beide Folien besitzen eine Dicke von 23 µm und haben die folgenden Eigenschaften:

| Typ | Material | Beidseitig geätzt | Silikonisiert | Sa in µm (abgedeckte Seite) | Sa in µm (offene Seite) |
|---|---|---|---|---|---|
| erfindungsgemäß | PET | ja | Ohne Silikon | 0,63 | 0,67 |
| Nicht erfindungsgemäß | PET | Nicht geätzt | ja | 0,08 | 0,13 |

Ausführungsformen beispielhafter Haftklebstreifen (alle Haftklebstreifen haben im Verklebungs- und Anfassbereich identische Abmessungen in der Streifenbreite und-länge, die Dicke ist abhängig vom Produktaufbau).

| Haftklebstreifen | Anfasser | Klebmasse | Schaumstoff (Träger) |
|---|---|---|---|
| A | nicht erfindungsgemäß | 650 µm Beispiel 1 | - |
| B | erfindungsgemäß | 2x 250 µm Beispiel 2 | TEE 2001 von Alveo Sekisui (NL) |
| C | erfindungsgemäß | 2x 250 µm Beispiel 3 | TEE 2001 von Alveo Sekisui (NL) |
| D | erfindungsgemäß | 650 µm Beispiel 4 | - |
| E | erfindungsgemäß | 650 µm Beispiel 5 | - |
| F | nicht erfindungsgemäß | 650 µm Beispiel 5 | - |
| G | erfindungsgemäß | 650 µm Beispiel 6 | - |

Test auf Beschädigungseffekte von Ausführungsformen beispielhafter Haftklebestreifen beim Wiederablösen von empfindlichen Untergründen

| Haftklebstreifen | Keine Beschädi gung der Raufaser | Beschädi gung der Raufaser | Kein Abrutschen vom Anfasser | Abrutschen vom Anfasser | Kein Nachgreifen zum vollständigen Entfernen des Haftklebstreifens | Nachgreifen zum vollständigen Entfernen des Haftklebstreifens |
|---|---|---|---|---|---|---|
| A | 9x | 41x | 9x | 41x | 9x | 41 |
| B | 50x | - | 50x | - | 50x | - |
| C | 50x | - | 50x | - | 50x | - |
| D | 48x | 2x | 50x | - | 50x | - |
| E | 50x | - | 50x | - | 50x | - |
| F | 5x | 45x | - | 45x | - | 45x |
| G | 29x | 21x (Anfasser reißt ab) | 50x | - | 50x | - |

Ozonstabilität von Ausführungsformen beispielhafter Haftklebestreifen

| Haftklebstreifen | Ozontest 1 | Ozontest 2 |
|---|---|---|
| A | nicht bestanden | nicht bestanden |
| B | bestanden | bestanden |
| C | bestanden | bestanden |
| D | bestanden | bestanden |
| E | bestanden | bestanden |
| F | bestanden | bestanden |
| G | nicht bestimmt | nicht bestimmt |

Weiterhin wurde noch die Trennkraft bestimmt, die aufgewendet werden muss, um den Anfasser von der Klebemasse zu entfernen.

| | | |
|---|---|---|
| Klebmasse | Anfasser | Trennkraft 90° in N/cm |
| Beispiel 3 | Nicht erfindungsgemäß | 0,05 |
| Beispiel 3 | erfindungsgemäß | 3,81 |

Hieraus wird ersichtlich, dass mit dem erfindungsgemäßen Anfasser eine erheblich verbesserte Verbundhaftung erzielt wird.

Die Ergebnisse belegen, dass die Haftklebestreifen mit erfindungsgemäßem Anfasser, das heißt einem rauen Anfasser mit zur Haftklebemasse weisenden rauen Seite, beim Wiederablösen nicht reißen und zudem eine deutlich verbesserte Ozon-Stabilität zeigen.

## Patentansprüche

1. Klebstreifen, ein- oder beidseitig haftklebrig, enthaltend mindestens eine Haftklebemasseschicht, wobei der Klebstreifen einen Anfasserbereich aufweist, an dem sich der Klebstreifen durch dehnendes, verstreckendes Ziehen in Richtung der Verklebungsebene wieder ablösen lässt, wobei der Klebstreifen im Anfasserbereich auf einer Seite oder auf beiden Seiten mit einer Anfasserschicht versehen ist,
**dadurch gekennzeichnet, dass** zumindest eine Anfasserschicht eine Schichtdicke von höchstens 50 µm, insbesondere zwischen 10 und 40 µm, und auf mindestens einer Seite, insbesondere auf beiden Seiten, eine Rauheit von Sₐ 0,10 bis 2,00 µm, insbesondere von Sₐ 0,15 bis 0,8 µm, jeweils ermittelt nach ISO 25178-602, aufweist und dass die Trennkraft der Anfasserschicht von der Haftklebemasseschicht mindestens 1 N/cm, insbesondere mindestens 3 N/cm, jeweils ermittelt nach ASTM D3330/D3330M - 04/ Testmethode D, beträgt, wobei sich die raue Seite der Anfasserschicht auf der Seite der Haftklebemasseschicht befindet, und
dass mindestens eine der mindestens einen Haftklebemasseschichten zumindest eine Elastomerkomponente vom Typ eines Butadien-Vinylaromaten-Blockcopolymers aufweist, wobei die mindestens eine Elastomerkomponenten zu mindestens 90 Gew.-%, bezogen auf den Gesamtblockcopolymergehalt, aus mindestens einem Polybutadien-Vinylaromaten-Blockcopolymer besteht, wobei das mindestens eine Polybutadien-Vinylaromaten-Blockcopolymer Polymerblöcke, überwiegend gebildet durch Polymerisation von Vinylaromaten (A-Blöcke), vorzugsweise Styrol, und solche, überwiegend gebildet durch Polymerisation von 1,3-Butadien (B-Blöcke), enthält.

2. Klebstreifen nach Anspruch 1, **dadurch gekennzeichnet, dass** die Anfasserschicht ausgewählt ist aus Aluminium, Kunststoff, insbesondere PET, PP, PVC oder PUR, und Papier.

3. Klebstreifen nach Anspruch 1 oder 2, **dadurch gekennzeichnet, dass** die Anfasserschicht releaseschichtfrei mit dem Klebstreifen verbunden ist.

4. Klebstreifen nach einem der Ansprüche 1 bis 3, **dadurch gekennzeichnet, dass** der Diblockanteil der mindestens einen Elastomerkomponente 5 bis 60 Gew.-%, bezogen auf den Gesamtblockcopolymergehalt, beträgt.

5. Klebstreifen nach einem der Ansprüche 1 bis 4, **dadurch gekennzeichnet, dass** der Diblockanteil der mindestens einen Elastomerkomponente 10 bis 55 Gew.-%, bezogen auf den Gesamtblockcopolymergehalt, beträgt.

6. Klebstreifen nach einem der Ansprüche 1 bis 4, **dadurch gekennzeichnet, dass** der Diblockanteil der mindestens einen Elastomerkomponente 32 bis 50 Gew.-%, bezogen auf den Gesamtblockcopolymergehalt, beträgt.

7. Klebstreifen nach einem der Ansprüche 1 bis 6, **dadurch gekennzeichnet, dass** die mindestens eine Haftklebemasseschicht des weiteren
(a) zumindest ein Klebharz, das ein Molgewicht M_{w} von höchstens 5.000 g/mol aufweist, das mit Polybutadienblöcken kompatibel ist und das mit den Vinylaromatenblöcken im Wesentlichen nicht kompatibel ist,
(b) optional zumindest ein Weichharz mit einem Anteil von 0 Gew.-% bis 15 Gew.-%, bezogen auf die Gesamtklebemasse,
(c) optional weitere Additive
enthält.

8. Klebstreifen nach einem der Ansprüche 1 bis 7, **dadurch gekennzeichnet, dass** die mindestens eine Haftklebemasseschicht mindestens 2 Gew.-%, vorzugsweise mindestens 5 Gew.-%, und höchstens 15 Gew.-%, vorzugsweise höchstens 12 Gew.-% Weichharz mit einer Schmelzviskosität bestimmt nach der beschriebenen Messmethode von mindestens 25 Pa·s, jeweils bezogen auf die Gesamtklebemasse, enthält.

9. Klebstreifen nach einem der Ansprüche 1 bis 8, **dadurch gekennzeichnet, dass** die mindestens eine Haftklebemasseschicht höchstens 1 Gew.-%, vorzugsweise 0 Gew.-%, bezogen auf die Gesamtklebemasse, niederviskose Weichmacher mit einer Viskosität bestimmt nach der beschriebenen Messmethode von unter 25 Pa·s enthält.

10. Klebstreifen nach einem der Ansprüche 1 bis 9, **dadurch gekennzeichnet, dass** mindestens eine der mindestens einen Haftklebemasseschichten eine Haftklebemassenschicht HK1 ist, wobei Haftklebemasseschicht HK1
a) zumindest eine Elastomerkomponente vom Typ eines Polybutadien-Polyvinylaromaten-Blockcopolymers mit einem Anteil in Bezug auf die Gesamtklebemasse von 42 Gew.-% bis 55 Gew.-% und einem Diblockanteil in Bezug auf den Gesamtblockcopolymergehalt von 32 Gew.-% bis 55 Gew.-%, vorzugsweise bis 50 Gew.-%,
b) zumindest ein Klebharz, das ein Kohlenwasserstoffharz mit einem DACP-Wert von mindestens +5°C und höchstens +50°C und einem MMAP-Wert von mindestens +50°C und höchstens +85°C ist,
c) optional zumindest ein Weichharz mit einem Anteil von 0 Gew.-% bis 15 Gew.-%, bezogen auf die Gesamtklebemasse,
d) optional weitere Additive.

11. Klebstreifen nach einem der Ansprüche 1 bis 9, **dadurch gekennzeichnet, dass** mindestens eine der mindestens einen Haftklebemasseschichten eine Haftklebemassenschicht HK2 ist, wobei Haftklebemasseschicht HK2
e) zumindest eine Elastomerkomponente vom Typ eines Polybutadien-Polyvinylaromaten-Blockcopolymers mit einem Anteil in Bezug auf die Gesamtklebemasse von 40 Gew.-% bis 60 Gew.-% und einem Diblockanteil in Bezug auf den Gesamtblockcopolymergehalt von 10 Gew.-% bis 30 Gew.-%,
f) zumindest ein Klebharz, das ein Kohlenwasserstoffharz mit einem DACP-Wert von mindestens +5°C und höchstens +50°C und einem MMAP-Wert von mindestens +50°C und höchstens +85°C ist,
g) zumindest ein Weichharz mit einem Anteil von 0 Gew.-% bis 12 Gew.-%, bezogen auf die Gesamtklebemasse,
h) optional weitere Additive
enthält.

12. Klebstreifen nach einem der Ansprüche 1 bis 9, **dadurch gekennzeichnet, dass** mindestens eine der mindestens einen Haftklebemasseschichten eine Haftklebemassenschicht HK3 ist, wobei Haftklebemasseschicht HK3
i) zumindest eine Elastomerkomponente vom Typ eines Butadien-Blockcopolymers mit einem Anteil in Bezug auf die Gesamtklebemasse von 38 Gew.-% bis 48 Gew.-% und einem Diblockanteil in Bezug auf den Gesamtblockcopolymergehalt von 10 Gew.-% bis 30 Gew.-%,
j) zumindest ein Klebharz, das ein Kohlenwasserstoffharz mit einem DACP-Wert von mindestens +5°C und höchstens +50°C und einem MMAP-Wert von mindestens +50°C und höchstens +85°C ist,
k) zumindest ein Weichharz mit einem Anteil von 2 Gew.-% bis 15 Gew.-%, bezogen auf die Gesamtklebemasse,
I) optional weitere Additive
enthält.

13. Klebstreifen nach einem der Ansprüche 1 bis 12, **dadurch gekennzeichnet, dass** er ein trägerfreier Klebestrip ist.

14. Klebstreifen nach einem der Ansprüche 1 bis 12, **dadurch gekennzeichnet, dass** er ein trägerhaltiger Klebestrip ist, insbesondere ein schaumträgerhaltiger Klebestrip.

15. Verwendung des Klebstreifens nach einem der Ansprüche 1 bis 14 zum rückstandsfrei wiederlösbaren Verkleben.

## Claims

1. Adhesive strip, tacky on one or both sides, comprising at least one layer of pressure-sensitive adhesive, where the adhesive strip has a pull tab region with which the adhesive strip is redetachable by extensive, stretching pulling in the direction of the bond plane, the adhesive strip being provided in the pull tab region on one side or on both sides with a pull tab layer,
**characterized in that** at least one pull tab layer has a layer thickness of at most 50 µm, more particularly between 10 and 40 µm, and on at least one side, more particularly on both sides, has a roughness Sₐ of 0.10 to 2.00 µm, more particularly of 0.15 to 0.8 µm, determined in each case according to ISO 25178-602, and **in that** the release force of the pull tab layer from the layer of pressure-sensitive adhesive is at least 1 N/cm, more particularly at least 3 N/cm, determined in each case according to ASTM D3330/D3330M - 04/ Test Method D, with the rough side of the pull tab layer located on the side of the layer of pressure-sensitive adhesive, and
**in that** at least one of the at least one layer of pressure-sensitive adhesive comprises at least one elastomer component of butadiene-vinylaromatic block copolymer type, where the at least one elastomer component consists to an extent of at least 90 wt%, based on the overall block copolymer content, of at least one polybutadiene-vinylaromatic block copolymer, where the at least one polybutadiene-vinylaromatic block copolymer comprises polymer blocks formed predominantly by polymerization of vinylaromatics (A blocks), preferably styrene, and those formed predominantly by polymerization of 1,3-butadiene (B blocks).

2. Adhesive strip according to Claim 1, **characterized in that** the pull tab layer is selected from aluminium, plastic, more particularly with PET, PP, PVC or PUR, and paper.

3. Adhesive strip according to Claim 1 or 2, **characterized in that** the pull tab layer is joined, without any release layer, to the adhesive strip.

4. Adhesive strip according to any of Claims 1 to 3, **characterized in that** the diblock fraction of the at least one elastomer component is 5 to 60 wt%, based on the overall block copolymer content.

5. Adhesive strip according to any of Claims 1 to 4, **characterized in that** the diblock fraction of the at least one elastomer component is 10 to 55 wt%, based on the overall block copolymer content.

6. Adhesive strip according to any of Claims 1 to 4, **characterized in that** the diblock fraction of the at least one elastomer component is 32 to 50 wt%, based on the overall block copolymer content.

7. Adhesive strip according to any of Claims 1 to 6, **characterized in that** the at least one layer of pressure-sensitive adhesive further comprises
(a) at least one tackifier resin which has a molar weight M_{w} of at most 5000 g/mol, which is compatible with polybutadiene blocks and which is substantially incompatible with the vinylaromatic blocks,
(b) optionally at least one plasticizer resin with a fraction of 0 wt% to 15 wt%, based on the overall adhesive,
(c) optionally further additives.

8. Adhesive strip according to any of Claims 1 to 7, **characterized in that** the at least one layer of pressure-sensitive adhesive comprises at least 2 wt%, preferably at least 5 wt%, and at most 15 wt%, preferably at most 12 wt%, of plasticizer resin having a melt viscosity, determined by the measurement method described, of at least 25 Pa·s, based in each case on the overall adhesive.

9. Adhesive strip according to any of Claims 1 to 8, **characterized in that** the at least one layer of pressure-sensitive adhesive comprises at most 1 wt%, preferably 0 wt%, based on the overall adhesive, of low-viscosity plasticizers having a viscosity, determined by the measurement method described, of below 25 Pa·s.

10. Adhesive strip according to any of Claims 1 to 9, **characterized in that** at least one of the at least one layer of pressure-sensitive adhesive (PSA) is a PSA layer HK1, where PSA layer HK1 comprises
a) at least one elastomer component of polybutadiene-polyvinylaromatic block copolymer type with a fraction in relation to the overall adhesive of 42 wt% to 55 wt% and with a diblock fraction in relation to the overall block copolymer content of 32 wt% to 55 wt%, preferably to 50 wt%,
b) at least one tackifier resin which is a hydrocarbon resin having a DACP of at least +5°C and at most +50°C and a MMAP of at least +50°C and at most +85°C,
c) optionally at least one plasticizer resin having a fraction of 0 wt% to 15 wt%, based on the overall adhesive,
d) optionally further additives.

11. Adhesive strip according to any of Claims 1 to 9, **characterized in that** at least one of the at least one layer of pressure-sensitive adhesive (PSA) is a PSA layer HK2, where PSA layer HK2 comprises
e) at least one elastomer component of polybutadiene-polyvinylaromatic block copolymer type with a fraction in relation to the overall adhesive of 40 wt% to 60 wt% and with a diblock fraction in relation to the overall block copolymer content of 10 wt% to 30 wt%,
f) at least one tackifier resin which is a hydrocarbon resin having a DACP of at least +5°C and at most +50°C and a MMAP of at least +50°C and at most +85°C,
g) optionally at least one plasticizer resin having a fraction of 0 wt% to 12 wt%, based on the overall adhesive,
h) optionally further additives.

12. Adhesive strip according to any of Claims 1 to 9, **characterized in that** at least one of the at least one layer of pressure-sensitive adhesive (PSA) is a PSA layer HK3, where PSA layer HK3 comprises
i) at least one elastomer component of butadiene block copolymer type with a fraction in relation to the overall adhesive of 38 wt% to 48 wt% and with a diblock fraction in relation to the overall block copolymer content of 10 wt% to 30 wt%,
j) at least one tackifier resin which is a hydrocarbon resin having a DACP of at least +5°C and at most +50°C and a MMAP of at least +50°C and at most +85°C,
k) optionally at least one plasticizer resin having a fraction of 2 wt% to 15 wt%, based on the overall adhesive,
1) optionally further additives.

13. Adhesive strip according to any of Claims 1 to 12, **characterized in that** it is a carrier-free adhesive strip.

14. Adhesive strip according to any of Claims 1 to 12, **characterized in that** it is a carrier-containing adhesive strip, more particularly a foam carrier-containing adhesive strip.

15. Use of the adhesive strip according to any of Claims 1 to 14 for residuelessly releasable bonding.

## Revendications

1. Bande adhésive, autocollante sur un ou deux côtés, contenant au moins une couche de masse autoadhésive, la bande adhésive présentant une zone de préhension au niveau de laquelle la bande adhésive se laisse retirer par tirage extensible, étirable en direction du plan de collage, la bande adhésive dans la zone de préhension étant pourvue, sur un côté ou sur les deux côtés, d'une couche de préhension,
**caractérisée en ce qu'**au moins une couche de préhension présente une épaisseur de couche d'au plus 50 µm, en particulier entre 10 et 40 µm, et sur au moins un côté, en particulier sur les deux côtés, une rugosité de Sₐ 0,10 à 2,00 µm, en particulier de Sₐ 0,15 à 0,8 µm, à chaque fois déterminée selon la norme ISO 25178-602, et **en ce que** la force pour séparer la couche de préhension de la couche de masse autoadhésive est d'au moins 1 N/cm, en particulier d'au moins 3 N/cm, à chaque fois déterminée selon la norme ASTM D3330/D3330M - 04/méthode d'essai D, le côté rugueux de la couche de préhension se trouvant sur le côté de la couche de masse autoadhésive, et
**en ce qu'**au moins l'une parmi l'au moins une couche de masse autoadhésive présente au moins un composant d'élastomère du type d'un copolymère à blocs butadiène-composés vinylaromatiques, l'au moins un composant d'élastomère étant constitué d'au moins 90 % en poids, par rapport à la teneur totale en copolymères à blocs, d'au moins un copolymère à blocs polybutadiène-composés vinylaromatiques, l'au moins un copolymère à blocs polybutadiène-composés vinylaromatiques contenant des blocs de polymère formés majoritairement par polymérisation de composés vinylaromatiques (blocs A), de préférence le styrène, et des blocs de polymère formés majoritairement par polymérisation de 1,3-butadiène (blocs B).

2. Bande adhésive selon la revendication 1, **caractérisée en ce que** la couche de préhension est choisie parmi l'aluminium, le plastique, en particulier le PET, le PP, le PVC et le PUR, et le papier.

3. Bande adhésive selon la revendication 1 ou 2, **caractérisée en ce que** la couche de préhension est reliée à la bande adhésive sans couche de détachement.

4. Bande adhésive selon l'une quelconque des revendications 1 à 3, **caractérisée en ce que** la proportion de dibloc de l'au moins un composant d'élastomère est de 5 à 60 % en poids, par rapport à la teneur totale en copolymère à blocs.

5. Bande adhésive selon l'une quelconque des revendications 1 à 4, **caractérisée en ce que** la proportion de dibloc de l'au moins un composant d'élastomère est de 10 à 55 % en poids, par rapport à la teneur totale en copolymère à blocs.

6. Bande adhésive selon l'une quelconque des revendications 1 à 4, **caractérisée en ce que** la proportion de dibloc de l'au moins un composant d'élastomère est de 32 à 50 % en poids, par rapport à la teneur totale en copolymère à blocs.

7. Bande adhésive selon l'une quelconque des revendications 1 à 6, **caractérisée en ce que** l'au moins une couche de masse autoadhésive contient en outre
(a) au moins une résine adhésive, qui présente un poids moléculaire M_{w} d'au plus 5 000 g/mole, qui est compatible avec des blocs de polybutadiène et qui n'est essentiellement pas compatible avec les blocs vinylaromatiques,
(b) éventuellement au moins une résine souple en une proportion de 0 % en poids à 15 % en poids, par rapport à la masse adhésive totale,
(c) éventuellement d'autres additifs.

8. Bande adhésive selon l'une quelconque des revendications 1 à 7, **caractérisée en ce que** l'au moins une couche de masse autoadhésive contient au moins 2 % en poids, de préférence au moins 5 % en poids, et au plus 15 % en poids, de préférence au plus 12 % en poids de résine souple dotée d'une viscosité de masse fondue, déterminée selon la méthode de mesure décrite, d'au moins 25 Pa·s, à chaque fois par rapport à la masse adhésive totale.

9. Bande adhésive selon l'une quelconque des revendications 1 à 8, **caractérisée en ce que** l'au moins une couche de masse autoadhésive contient au plus 1 % en poids, de préférence 0 % en poids, par rapport à la masse adhésive totale, de plastifiant à faible viscosité doté d'une viscosité, déterminée selon la méthode de mesure décrite, inférieure à 25 Pa·s.

10. Bande adhésive selon l'une quelconque des revendications 1 à 9, **caractérisée en ce qu'**au moins l'une parmi l'au moins une couche de masse autoadhésive est une couche de masse autoadhésive HK1, la couche de masse autoadhésive HK1 contenant
a) au moins un composant d'élastomère du type d'un copolymère à blocs polybutadiène-polyvinylaromatiques en une proportion, par rapport à la masse adhésive totale, de 42 % en poids à 55 % en poids et une proportion de diblocs, par rapport à la teneur totale en copolymères à blocs, de 32 % en poids à 55 % en poids, de préférence allant jusqu'à 50 % en poids,
b) au moins une résine adhésive, qui est une résine d'hydrocarbure dotée d'une valeur DACP d'au moins + 5 °C et d'au plus + 50 °C et d'une valeur MMAP d'au moins + 50 °C et d'au plus + 85 °C,
c) éventuellement au moins une résine souple en une proportion de 0 % en poids à 15 % en poids, par rapport à la masse adhésive totale,
d) éventuellement d'autres additifs.

11. Bande adhésive selon l'une quelconque des revendications 1 à 9, **caractérisée en ce qu'**au moins l'une parmi l'au moins une couche de masse autoadhésive est une couche de masse autoadhésive HK2, la couche de masse autoadhésive HK2 contenant
e) au moins un composant d'élastomère du type d'un copolymère à blocs polybutadiène-polyvinylaromatiques en une proportion, par rapport à la masse adhésive totale, de 40 % en poids à 60 % en poids et une proportion de diblocs, par rapport à la teneur totale en copolymères à blocs, de 10 % en poids à 30 % en poids,
f) au moins une résine adhésive, qui est une résine d'hydrocarbure dotée d'une valeur DACP d'au moins + 5 °C et d'au plus + 50 °C et d'une valeur MMAP d'au moins + 50 °C et d'au plus + 85 °C,
g) au moins une résine souple en une proportion de 0 % en poids à 12 % en poids, par rapport à la masse adhésive totale,
h) éventuellement d'autres additifs.

12. Bande adhésive selon l'une quelconque des revendications 1 à 9, **caractérisée en ce qu'**au moins l'une parmi l'au moins une couche de masse autoadhésive est une couche de masse autoadhésive HK3, la couche de masse autoadhésive HK3 contenant
i) au moins un composant d'élastomère du type d'un copolymère à blocs de butadiène en une proportion, par rapport à la masse adhésive totale, de 38 % en poids à 48 % en poids et une proportion de diblocs, par rapport à la teneur totale en copolymères à blocs, de 10 % en poids à 30 % en poids,
j) au moins une résine adhésive, qui est une résine d'hydrocarbure dotée d'une valeur DACP d'au moins + 5 °C et d'au plus + 50 °C et d'une valeur MMAP d'au moins + 50 °C et d'au plus + 85 °C,
k) au moins une résine souple en une proportion de 2 % en poids à 15 % en poids, par rapport à la masse adhésive totale,
1) éventuellement d'autres additifs.

13. Bande adhésive selon l'une quelconque des revendications 1 à 12, **caractérisée en ce qu'**elle est un ruban adhésif exempt de support.

14. Bande adhésive selon l'une quelconque des revendications 1 à 12, **caractérisée en ce qu'**elle est un ruban adhésif contenant un support, en particulier un ruban adhésif contenant un support en mousse.

15. Utilisation de la bande adhésive selon l'une quelconque des revendications 1 à 14 pour l'adhérence détachable sans résidu.
